(19) Europäisches Patentamt
European Patent Office
Office européen des brevets

(11) EP 2 544 170 A1

(12) EUROPEAN PATENT APPLICATION
published in accordance with Art. 153(4) EPC

(43) Date of publication:
09.01.2013 Bulletin 2013/02

(51) Int Cl.:
G09G 3/20 (2006.01)          G09G 3/288 (2013.01)
H04N 5/66 (2006.01)          H04N 13/04 (2006.01)

(21) Application number: 11750374.8

(22) Date of filing: 02.03.2011

(86) International application number:
PCT/JP2011/001203

(87) International publication number:
WO 2011/108261 (09.09.2011 Gazette 2011/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 05.03.2010 JP 2010048694

(71) Applicant: Panasonic Corporation
Kadoma-shi
Osaka 571-8501 (JP)

(72) Inventors:
• ORIGUCHI, Takahiko
Osaka-shi, Osaka 540-6207 (JP)

• SHIOZAKI, Yuya
Osaka-shi, Osaka 540-6207 (JP)
• KIGO, Shigeo
Osaka-shi, Osaka 540-6207 (JP)
• YOSHIHAMA, Yutaka
Osaka-shi, Osaka 540-6207 (JP)
• ISHIZUKA, Mitsuhiro
Osaka-shi, Osaka 540-6207 (JP)

(74) Representative: Vigand, Philippe
Novagraaf International SA
Chemin de l'Echo 3
1213 Onex (CH)

(54) **PLASMA DISPLAY DEVICE DRIVING METHOD, PLASMA DISPLAY DEVICE, AND PLASMA DISPLAY SYSTEM**

(57)     A plasma display apparatus usable as a 3D image display apparatus can reduce the crosstalk for a user who views a 3D image displayed on a plasma display panel through shutter glasses. For this purpose, the plasma display apparatus displays the 3D image on the plasma display panel having a plurality of pixels each of which is formed of a plurality of discharge cells by alternately repeating a right-eye field and a left-eye field. The plasma display apparatus adds a predetermined gradation value to an image signal to be displayed in a certain field when the number of pixels where the gradation equal to or higher than a high gradation threshold is displayed in the field immediately before a certain field and the gradation equal to or lower than a low gradation threshold is displayed in the certain field is equal to or larger than a number-of-pixels threshold.

FIG. 3

## Description

## TECHNICAL FIELD

The present invention relates to a driving method of a plasma display apparatus, a plasma display apparatus, and a plasma display system that alternately display, on a plasma display panel, a left-eye image and a right-eye image capable of being three-dimensionally viewed using shutter glasses.

## BACKGROUND ART

An alternating-current surface discharge type panel typical as a plasma display panel (hereinafter referred to as "panel") has many discharge cells between a front substrate and a rear substrate that are faced to each other. The front substrate has the following elements:

a plurality of display electrode pairs disposed in parallel on a front glass substrate; and
a dielectric layer and a protective layer for covering the display electrode pairs.

Here, each display electrode pair is formed of a pair of scan electrode and sustain electrode.
The rear substrate has the following elements:

a plurality of data electrodes disposed in parallel on a rear glass substrate;
a dielectric layer for covering the data electrodes;
a plurality of barrier ribs disposed on the dielectric layer in parallel with the data electrodes; and
phosphor layers disposed on the surface of the dielectric layer and on side surfaces of the barrier ribs.

The front substrate and rear substrate are faced to each other so that the display electrode pairs and the data electrodes three-dimensionally intersect, and are sealed. Discharge gas containing xenon with a partial pressure of 5%, for example, is filled into a discharge space in the sealed product. Discharge cells are disposed in intersecting parts of the display electrode pairs and the data electrodes. In the panel having this structure, ultraviolet rays are emitted by gas discharge in each discharge cell. The ultraviolet rays excite respective phosphors of red (R), green (G), and blue (B) to emit light, and thus provide color image display.
A subfield method is generally used as a method of driving the panel. In this subfield method, one field is divided into a plurality of subfields, and light is emitted or light is not emitted in each discharge cell in each subfield, thereby performing gradation display. Each subfield has an initializing period, an address period, and a sustain period.
In the initializing period, an initializing waveform is applied to each scan electrode, and initializing discharge is caused in each discharge cell. Thus, wall charge required for a subsequent address operation is formed in each discharge cell, and a priming particle (an excitation particle for causing discharge) for stably causing address discharge is generated.
In the address period, a scan pulse is sequentially applied to scan electrodes, and an address pulse is selectively applied to data electrodes based on an image signal to be displayed. Thus, address discharge is caused between the scan electrode and the data electrode of the discharge cell to emit light, thereby producing wall charge in the discharge cell (hereinafter, this operation is also collectively referred to as "address").
In a sustain period, as many sustain pulses as a number based on the luminance weight determined for each subfield are alternately applied to the display electrode pairs formed of the scan electrodes and the sustain electrodes. Thus, sustain discharge is caused in the discharge cell having undergone address discharge, thereby emitting light in the phosphor layer of this discharge cell (hereinafter, light emission by sustain discharge in a discharge cell is referred to as "lighting", and no light emission is referred to as "no-lighting"). Thus, light is emitted in each discharge cell at a luminance corresponding to the luminance weight. Thus, light is emitted at a luminance corresponding to the gradation value of an image signal in each discharge cell of the panel, and an image is displayed on the image display region of the panel.
A method has been studied which displays a three-dimensional (hereinafter referred to as "3D") image (hereinafter referred to as "3D image") capable of being viewed three-dimensionally using such a panel, and uses a plasma display apparatus as a 3D image display apparatus.
One 3D image is constituted by one right-eye image and one left-eye image. In this plasma display apparatus, when the 3D image is displayed on the panel, the right-eye image and left-eye image are alternately displayed on the panel. A user views the 3D image displayed on the panel using special glasses called shutter glasses (for example, Patent Literature 1). In the shutter glasses, right and left shutters alternately open and close synchronously with each of a field for displaying the right-eye image and a field for displaying the left-eye image.
The shutter glasses have a right-eye shutter and a left-eye shutter. In a period in which the right-eye image is displayed on the panel, the right-eye shutter is opened (visible light is transmitted) and the left-eye shutter is closed (visible light is blocked). In a period in which the left-eye image is displayed, the left-eye shutter is opened and the right-eye shutter is closed. Thus, the user can observe the right-eye image only with the right eye and the left-eye image only with the left eye, and can three-dimensionally view the 3D image displayed on the panel.
However, as the phosphor used in the panel, there is also a phosphor material having the following characteristics: the afterglow time is long and the afterglow continues for several milliseconds even after the completion of sustain discharge. The afterglow means a phenomenon where light emission continues even after the completion of the discharge in a discharge cell, and the afterglow time means the time until the afterglow decreases sufficiently.

Therefore, even after the period for displaying the right-eye image is completed, for example, the right-eye image can be displayed as an afterimage on the panel for a while. The afterimage means the phenomenon where, even after the period for displaying one image is completed, the image is displayed on the panel due to the afterglow.

When a left-eye image is displayed before the afterimage of a right-eye image disappears, the phenomenon where the right-eye image mixes with the left-eye image occurs. When a right-eye image is displayed before the afterimage of a left-eye image disappears, the phenomenon where the left-eye image mixes with the right-eye image occurs. Such a phenomenon is referred to as "crosstalk". When the crosstalk occurs, the 3D vision becomes difficult, disadvantageously.

Citation List

**Patent Literature**

PLT 1

Unexamined Japanese Patent Publication No. 2000-112428

**SUMMARY OF THE INVENTION**

The present invention provides a driving method of a plasma display apparatus that displays an image on a panel, which has a plurality of pixels each of which is formed of a plurality of discharge cells, by alternately repeating a right-eye field for displaying a right-eye image signal and a left-eye field for displaying a left-eye image signal. In this driving method, a predetermined gradation value is added to an image signal to be displayed in a certain field when the number of pixels where a gradation equal to or higher than a high gradation threshold is displayed in the field immediately before the certain field and a gradation equal to or lower than a low gradation threshold is displayed in the certain field is equal to or larger than a number-of-pixels threshold.

Thanks to this method, the plasma display apparatus usable as a 3D image display apparatus can reduce the crosstalk for a user who views the 3D image displayed on the panel through shutter glasses, and can improve the image display quality.

The present invention provides a driving method of a plasma display apparatus that displays an image on a panel having a plurality of pixels each of which is formed of a plurality of discharge cells by alternately repeating a right-eye field for displaying a right-eye image signal and a left-eye field for displaying a left-eye image signal. This driving method includes the following processes:

dividing the image display region of the panel into a plurality of display blocks;
adding a first gradation value to an image signal to be displayed in the certain field in a display block in which the number of pixels satisfying the following conditions is equal to or larger than a number-of-pixels threshold:

the gradation equal to or higher than a high gradation threshold is displayed in the field immediately before the certain field; and
the gradation equal to or lower than a low gradation threshold is displayed in the certain field; and

adding a second gradation value lower than the first gradation value to an image signal to be displayed in the certain field in a display block in which the first gradation value is not added in the certain field and that is adjacent to the display block where the first gradation value is added in the certain field.

Thanks to this method, the plasma display apparatus usable as a 3D image display apparatus can reduce the crosstalk for a user who views the 3D image displayed on the panel through shutter glasses, and can improve the image display quality.

In a driving method of the plasma display apparatus of the present invention, the luminance weight of each of the right-eye field and the left-eye field is set so that the luminance weight of the first subfield of one field is the largest, the luminance weights of the subsequent subfields decrease sequentially, and the luminance weight of the final subfield of the one field is the smallest. In the initializing period of the final subfield of one field, a forced initializing operation of causing initializing discharge in a discharge cell regardless of the operation of the immediately preceding subfield is performed. In the initializing period of the other subfield, a selective initializing operation of causing initializing discharge only in a discharge cell having undergone address discharge in the immediately preceding subfield is performed.

The plasma display apparatus of the present invention includes a panel having a plurality of pixels each of which is formed of a plurality of discharge cells, and a driver circuit for driving the panel. The plasma display apparatus displays an image on the panel by alternately repeating a right-eye field for displaying a right-eye image signal and a left-eye field for displaying a left-eye image signal. When the number of pixels where a gradation equal to or higher than a high gradation threshold is displayed in the field immediately before a certain field and a gradation equal to or lower than a low gradation threshold is displayed in the certain field is equal to or larger than a number-of-pixels threshold, the driver circuit adds a predetermined gradation value to an image signal to be displayed in the certain field.

Thus, the plasma display apparatus usable as a 3D image display apparatus can reduce the crosstalk for a user who views the 3D image displayed on the panel through shutter glasses, and can improve the image display quality.

The plasma display apparatus of the present invention includes a panel having a plurality of pixels each of which is formed of a plurality of discharge cells, and a driver circuit for driving the panel. The plasma display apparatus displays an image on the panel by alternately repeating a right-eye field for displaying a right-eye image signal and a left-eye field for displaying a left-eye image signal. The driver circuit performs the following processes:

> dividing the image display region of the panel into a plurality of display blocks;
> adding a first gradation value to an image signal to be displayed in a certain field in a display block in which the number of pixels satisfying the following conditions is equal to or larger than a number-of-pixels threshold:

>> the gradation equal to or higher than a high gradation threshold is displayed in the field immediately before the certain field; and
>> the gradation equal to or lower than a low gradation threshold is displayed in the certain field is equal to or larger than a number-of-pixels threshold; and

> adding a second gradation value lower than the first gradation value to an image signal to be displayed in the certain field in a display block in which the first gradation value is not added in the certain field and that is adjacent to the display block where the first gradation value is added in the certain field.

Thus, the plasma display apparatus usable as a 3D image display apparatus can reduce the crosstalk for a user who views the 3D image displayed on the panel through shutter glasses, and can improve the image display quality.

In the plasma display apparatus of the present invention, the driver circuit may have a control signal output section for outputting a shutter control signal synchronously with the right-eye field and the left-eye field.

A plasma display system of the present invention includes a plasma display apparatus and shutter glasses. The plasma display apparatus includes the following elements:

> a panel having a plurality of pixels each of which is formed of a plurality of discharge cells; and
a driver circuit that drives the panel and has a control signal output section for outputting a shutter control signal synchronously with a right-eye field for displaying a right-eye image signal and a left-eye field for displaying a left-eye image signal.

The plasma display apparatus displays an image on the panel by alternately repeating the right-eye field and the left-eye field. The shutter glasses include a control signal receiving section for receiving the shutter control signal, a right-eye shutter, and a left-eye shutter, and open or close the right-eye shutter and the left-eye shutter based on the shutter control signal. The driver circuit adds a predetermined gradation value to an image signal to be displayed in a certain field when the number of pixels where a gradation equal to or higher than a high gradation threshold is displayed in the field immediately before a certain field and a gradation equal to or lower than a low gradation threshold is displayed in the certain field is equal to or larger than a number-of-pixels threshold.

Thus, the plasma display apparatus usable as a 3D image display apparatus can reduce the crosstalk for a user who views the 3D image displayed on the panel through the shutter glasses, and can improve the image display quality.

A plasma display system of the present invention includes a plasma display apparatus and shutter glasses. The plasma display apparatus includes the following elements:

> a panel having a plurality of pixels each of which is formed of a plurality of discharge cells; and
> a driver circuit that drives the panel and has a control signal output section for outputting a shutter control signal synchronously with a right-eye field for displaying a right-eye image signal and a left-eye field for displaying a left-eye image signal.

The plasma display apparatus displays an image on the panel by alternately repeating the right-eye field and the left-eye field. The shutter glasses include a control signal receiving section for receiving the shutter control signal, a right-eye shutter, and a left-eye shutter, and open or close the right-eye shutter and the left-eye shutter based on the shutter control signal. The driver circuit performs the following processes:

> dividing the image display region of the panel into a plurality of display blocks;
> adding a first gradation value to an image signal to be displayed in a certain field in a display block in which the number of pixels satisfying the following conditions is equal to or larger than a number-of-pixels threshold:

>> the gradation equal to or higher than a high gradation threshold is displayed in the field immediately before the certain field; and

the gradation equal to or lower than a low gradation threshold is displayed in the certain field is equal to or larger than a number-of-pixels threshold; and

adding a second gradation value lower than the first gradation value to an image signal to be displayed in the certain field in a display block in which the first gradation value is not added in the certain field and that is adjacent to the display block where the first gradation value is added in the certain field.

Thus, the plasma display apparatus usable as a 3D image display apparatus can reduce the crosstalk for a user who views the 3D image displayed on the panel through the shutter glasses, and can improve the image display quality.

BRIEF DESCRIPTION OF DRAWINGS

Fig. 1 is an exploded perspective view showing a structure of a panel used in a plasma display apparatus in accordance with a first exemplary embodiment of the present invention.

Fig. 2 is an electrode array diagram of the panel used in the plasma display apparatus in accordance with the first exemplary embodiment of the present invention.

Fig. 3 is a diagram for schematically showing a circuit block of the plasma display apparatus and a plasma display system in accordance with a first exemplary embodiment of the present invention.

Fig. 4 is a diagram for schematically showing a driving voltage waveform to be applied to each electrode of the panel used in the plasma display apparatus in accordance with the first exemplary embodiment of the present invention.

Fig. 5 is a diagram for schematically showing a subfield structure of the plasma display apparatus and an opening/closing operation of shutter glasses in accordance with the first exemplary embodiment of the present invention.

Fig. 6 is a circuit block diagram of one configuration example of an afterglow suppressing circuit of the plasma display apparatus in accordance with the first exemplary embodiment of the present invention.

Fig. 7A is a diagram for schematically showing one example of a right-eye image displayed in a right-eye field.

Fig. 7B is a diagram for schematically showing one example of a left-eye image displayed in a left-eye field.

Fig. 7C is a diagram for schematically showing one example of the appearance of a display image on panel 10 when crosstalk of the afterimage of the right-eye image into the left-eye image occurs.

Fig. 7D is a diagram for schematically showing one example of a region where an AND gate of the afterglow suppressing circuit outputs "H".

Fig. 7E is a diagram for schematically showing one example of the appearance of a display image on panel 10 when predetermined gradation value K is added to a gradation value of the luminance of the left-eye image of a present field.

Fig. 8A is a diagram for schematically showing an example where a panel is divided into a plurality of display blocks in accordance with a second exemplary embodiment of the present invention.

Fig. 8B is a diagram for schematically showing another example where the panel is divided into a plurality of display blocks in accordance with the second exemplary embodiment of the present invention.

Fig. 8C is a diagram for schematically showing the appearance of a display image when first gradation value K1 or second gradation value K2 is added to each display block of panel 10 in response to an image signal in accordance with the second exemplary embodiment of the present invention.

Fig. 9 is a circuit block diagram of one configuration example of an afterglow suppressing circuit of a plasma display apparatus in accordance with the second exemplary embodiment of the present invention.

**DESCRIPTION OF EMBODIMENTS**

A plasma display apparatus and a plasma display system in accordance with exemplary embodiments of the present invention will be described hereinafter with reference to the accompanying drawings.

**FIRST EXEMPLARY EMBODIMENT**

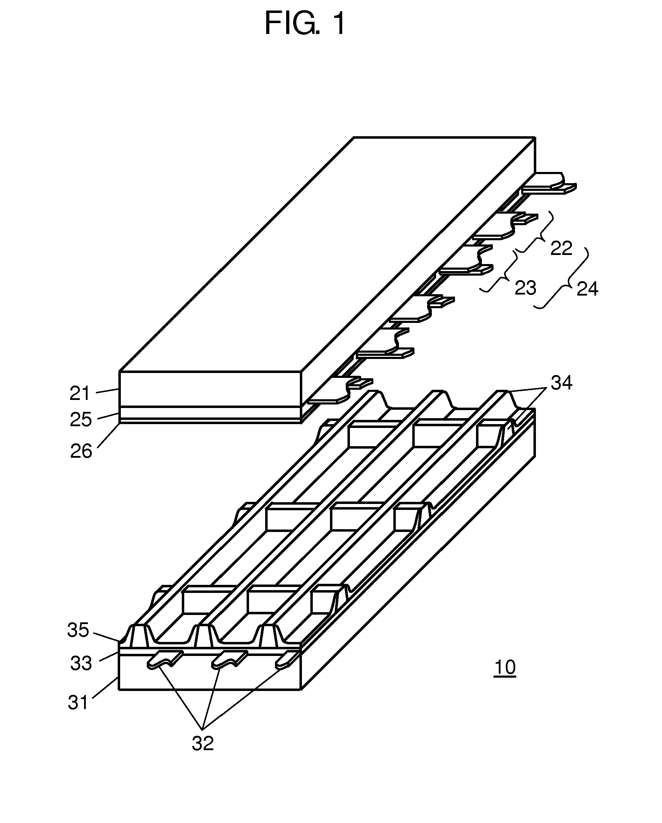

Fig. 1 is an exploded perspective view showing the structure of panel 10 used in a plasma display apparatus in accordance with a first exemplary embodiment of the present invention. A plurality of display electrode pairs 24 formed of scan electrodes 22 and sustain electrodes 23 is disposed on glass-made front substrate 21. Dielectric layer 25 is formed so as to cover scan electrodes 22 and sustain electrodes 23, and protective layer 26 is formed on dielectric layer 25.

Protective layer 26 is made of a material mainly made of magnesium oxide (MgO) in order to reduce the discharge start voltage in a discharge cell. The magnesium oxide has been used as a material of a panel, and has a large secondary electron emission coefficient and high durability when neon (Ne) gas and xenon (Xe) gas are filled.

A plurality of data electrodes 32 is formed on rear substrate 31, dielectric layer 33 is formed so as to cover data electrodes 32, and mesh barrier ribs 34 are formed on dielectric layer 33. Phosphor layers 35 for emitting lights of respective colors of red (R), green (G), and blue (B) are formed on the side surfaces of barrier ribs 34 and on dielectric layer 33.

Front substrate 21 and rear substrate 31 are faced to each other so that display electrode pairs 24 cross data electrodes 32 with a micro discharge space sandwiched between them, and the outer peripheries of them are sealed by a sealing material such as glass frit. The discharge space is filled with mixed gas of neon and xenon as discharge gas, for example.

The discharge space is partitioned into a plurality of sections by barrier ribs 34. Discharge cells are formed in the intersecting parts of display electrode pairs 24 and data electrodes 32.

Then, discharge is caused in the discharge cells, and light (lighting in the discharge cells) is emitted in phosphor layers 35 of them, thereby displaying a color image on panel 10.

In panel 10, one pixel is formed of three consecutive discharge cells arranged in the extending direction of display electrode pairs 24. The three discharge cells are a discharge cell for emitting light of red color (R), a discharge cell for emitting light of green color (G), and a discharge cell for emitting light of blue color (B).

The structure of panel 10 is not limited to the above-mentioned one, but may be a structure having striped barrier ribs, for example.

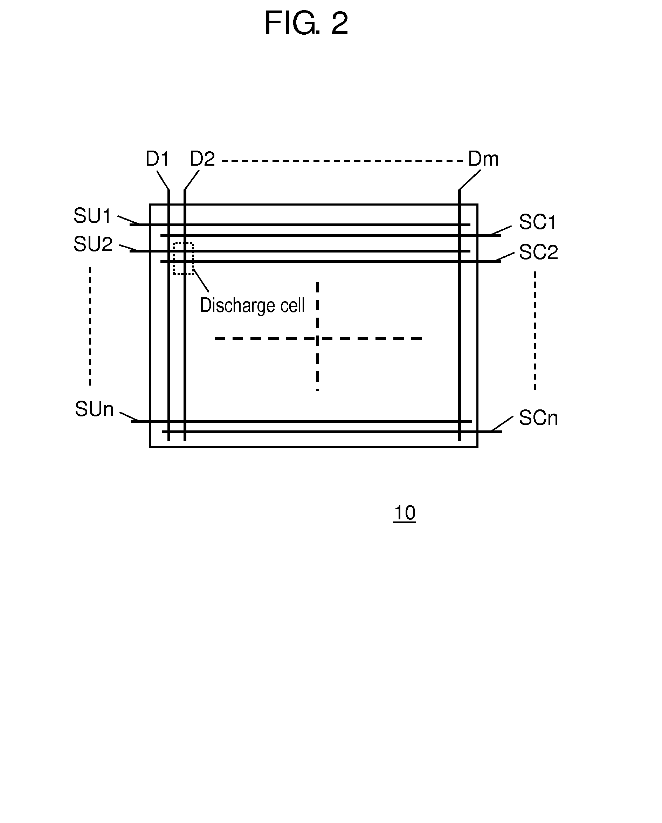

Fig. 2 is an electrode array diagram of panel 10 used in the plasma display apparatus in accordance with the first exemplary embodiment of the present invention. Panel 10 has n scan electrode SC1 through scan electrode SCn (scan electrodes 22 in Fig. 1) and n sustain electrode SU1 through sustain electrode SUn (sustain electrodes 23 in Fig. 1) both extended horizontally (row direction), and m data electrode D1 through data electrode Dm (data electrodes 32 in Fig. 1) extended vertically (column direction). A discharge cell is formed in the part where a pair of scan electrode SCi (i is 1 through n) and sustain electrode SUi intersect with one data electrode Dj (j is 1 through m). In other words, on one display electrode pair 24, m discharge cells are formed and m/3 pixels are formed. Thus, mxn discharge cells are formed in the discharge space, the region having mxn discharge cells defines the image display region of panel 10. In the panel where the number of pixels is 1920x1080, for example, m is 1920x3 and n is 1080.

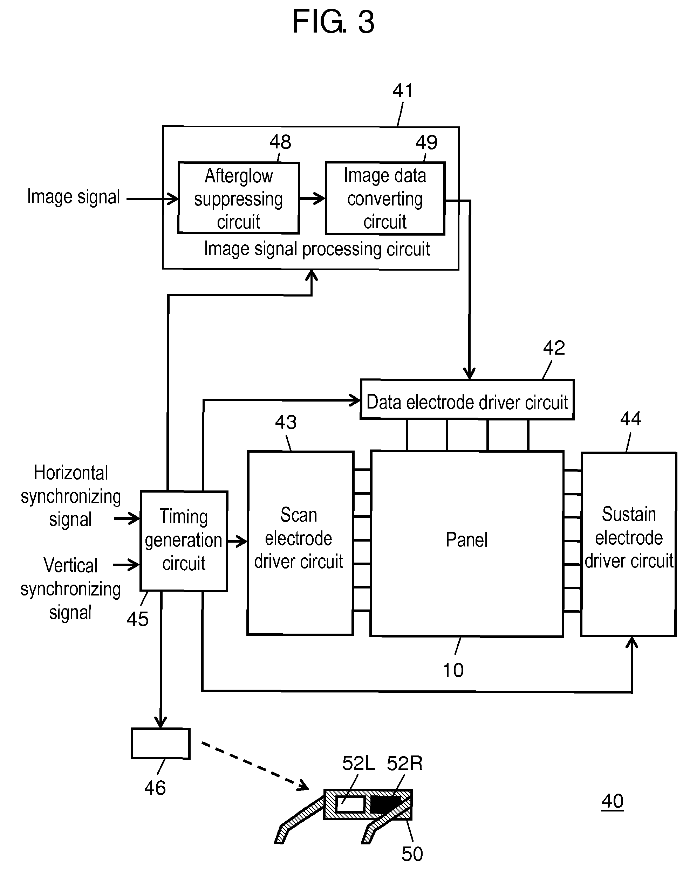

Fig. 3 is a diagram for schematically showing circuit blocks of plasma display apparatus 40 and a plasma display system in accordance with the first exemplary embodiment of the present invention. The plasma display system of the first exemplary embodiment includes, as components, plasma display apparatus 40 and shutter glasses 50.

Plasma display apparatus 40 includes panel 10 and a driver circuit for driving panel 10. The driver circuit has the following elements:

image signal processing circuit 41;

data electrode driver circuit 42;
scan electrode driver circuit 43;
sustain electrode driver circuit 44;
timing generation circuit 45; and
a power supply circuit (not shown) for supplying power required for each circuit block.

Plasma display apparatus 40 also includes control signal output section 46. Control signal output section 46 supplies, to shutter glasses 50 worn by a user, a shutter control signal for controlling the opening/closing of the shutters of shutter glasses 50.

Image signal processing circuit 41 has afterglow suppressing circuit 48 and image data converting circuit 49. Afterglow suppressing section 48 suppresses the crosstalk by preventing the user from visually recognizing an afterimage when the afterimage occurs. The details of afterglow suppressing circuit 48 are described later. Image data converting circuit 49 assigns a gradation value to each discharge cell based on an input image signal. Then, image data converting circuit 49 converts the gradation value into image data indicating light emission and no light emission in each subfield (light emission and no light emission are made correspond to digital signals, "1" and "0"). In other words, image signal processing circuit 41 converts the image signal in each field into image data indicating the light emission and no light emission in each subfield.

For example, when the input image signal includes an R signal, a G signal, and a B signal, image signal processing circuit 41 assigns each gradation value of R, G, and B to each discharge cell based on the R signal, the G signal, and the B signal. When the input image signal includes a luminance signal (Y signal) and a chroma signal (C signal, R-Y signal and B-Y signal, or u signal and v signal), image signal processing circuit 41 calculates the R signal, the G signal, and the B signal based on the luminance signal and chroma signal, and then assigns each gradation value (gradation value represented in one field) of R, G, and B to each discharge cell. Image signal processing circuit 41 converts each gradation value of R, G, and B assigned to each discharge cell into image data that indicates light emission or no light emission in each subfield.

When the input image signal is a 3D image signal for 3D vision having a right-eye image signal and a left-eye image signal, and the 3D image signal is displayed on panel 10, the right-eye image signal and left-eye image signal are alternately input to image signal processing circuit 41 in each field. Therefore, image data converting circuit 49 converts the right-eye image signal into right-eye image data, and converts the left-eye image signal into left-eye image data.

Timing generation circuit 45 generates various timing signals for controlling operations of respective circuit blocks based on a horizontal synchronizing signal and a vertical synchronizing signal. Timing generation circuit 45 supplies the generated timing signals to respective circuit blocks (data electrode driver circuit 42, scan electrode driver circuit 43, sustain electrode driver circuit 44, and image signal processing circuit 41).

Timing generation circuit 45 outputs, to control signal output section 46, a shutter control signal for controlling the opening/closing of the shutters of shutter glasses 50. Timing generation circuit 45 sets the shutter control signal at ON ("1") when the shutters of shutter glasses 50 are opened (visible light is transmitted), and sets the shutter control signal at OFF ("0") when the shutters of shutter glasses 50 are closed (visible light is blocked). The shutter control signal includes the following signals:

a control signal (right-eye shutter control signal) that is set at ON when the right-eye field for displaying the right-eye image signal is displayed on panel 10, and is set at OFF when the left-eye field for displaying the left-eye image signal is displayed on panel 10; and
a control signal (left-eye shutter control signal) that is set at ON when the left-eye field for displaying the left-eye image signal is displayed on panel 10, and is set at OFF when the right-eye field for displaying the right-eye image signal is displayed on panel 10.

Scan electrode driver circuit 43 has an initializing waveform generation circuit, a sustain pulse generation circuit, and a scan pulse generation circuit (not shown in Fig. 3). Scan electrode driver circuit 43 generates a driving voltage waveform based on a timing signal supplied from timing generation circuit 45, and applies it to each of scan electrode SC1 through scan electrode SCn. The initializing waveform generation circuit generates an initializing waveform to be applied to scan electrode SC1 through scan electrode SCn based on the timing signal in the initializing period. The sustain pulse generation circuit generates a sustain pulse to be applied to scan electrode SC1 through scan electrode SCn based on the timing signal in the sustain period. The scan pulse generation circuit has a plurality of scan electrode driver ICs (scan ICs), and generates a scan pulse to be applied to scan electrode SC1 through scan electrode SCn based on the timing signal in the address period.

Sustain electrode driver circuit 44 has a sustain pulse generation circuit and a circuit (not shown in Fig. 3) for generating voltage Ve1 and voltage Ve2. Sustain electrode driver circuit 44 generates a driving voltage waveform based on the timing signal supplied from timing generation circuit 45, and applies it to each of sustain electrode SU1 through sustain electrode SUn. Sustain electrode driver circuit 44 generates a sustain pulse based on the timing signal and applies it to sustain electrode SU1 through sustain electrode SUn in the sustain period.

Data electrode driver circuit 42 converts data in each subfield constituting the image data including right-eye image data and left-eye image data into a signal corresponding to each of data electrode D1 through data electrode Dm. Data electrode driver circuit 42 drives each of data electrode D1 through data electrode Dm based on the signal and the timing signal supplied from timing generation circuit 45. Data electrode driver circuit 42 generates an address pulse and applies it to each of data electrode D1 through data electrode Dm in the address period.

Control signal output section 46 has a light emitting element such as a light emitting diode (LED). Control signal output section 46 converts a shutter control signal synchronous with the right-eye field and left-eye field into an infrared signal, for example, and supplies it to shutter glasses 50.

Shutter glasses 50 include a control signal receiving section (not shown) for receiving a shutter control signal output from control signal output section 46, right-eye shutter 52R, and left-eye shutter 52L. Right-eye shutter 52R and left-eye shutter 52L can be independently opened or closed. Shutter glasses 50 open or close right-eye shutter 52R and left-eye shutter 52L based on the shutter control signal supplied from control signal output section 46. Right-eye shutter 52R is opened (visible light is transmitted) when the right-eye shutter control signal is in the ON state, and is closed (visible light is blocked) when it is in the OFF state. Left-eye shutter 52L is opened (visible light is transmitted) when the left-eye shutter control signal is in the ON state, and is closed (visible light is blocked) when it is in the OFF state. Right-eye shutter 52R and left-eye shutter 52L can be made of liquid crystal, for example. However, the material of the shutters of the present invention is not limited to the liquid crystal, but may be any material as long as the material allows high speed switching between the blocking and transmission of visible light.

Next, a driving voltage waveform and its operation for driving panel 10 are described. Plasma display apparatus 40 of the present embodiment performs gradation display by a subfield method. In this subfield method, the plasma display apparatus divides one field into a plurality of subfields on the time axis, and sets luminance weight for each subfield. Each subfield has an initializing period, an address period, and a sustain period. Then, plasma display apparatus 40 controls light emission and no light emission of each discharge cell in each subfield, thereby displaying an image on panel 10.

The luminance weight means the ratio in luminance between respective subfields, and as many sustain pulses as the number corresponding to the luminance weight are generated in each subfield in the sustain period. Therefore, in the subfield of luminance weight "8", light is emitted at a luminance about eight times that in the subfield of luminance weight "1", and light is emitted at a luminance about four times that in the subfield of luminance weight "2". Therefore, various gradations can be displayed and various images can be displayed by selectively emitting light in each subfield with a combination corresponding to the image signal.

In the present embodiment, the image signal input to plasma display apparatus 40 is an image signal for 3D vision where a right-eye image signal and left-eye image signal are alternately repeated in each field. By alternately and repeatedly displaying the right-eye field for displaying the right-eye image signal and the left-eye field for displaying the left-eye image signal on panel 10, an image (3D image) for 3D vision consisting of the right-eye image and the left-eye image is displayed on panel 10.

Therefore, the number of 3D images displayed in a unit time (for example, one second) is a half the field frequency (the number of fields occurring in one second). For example, when the field frequency is 60 Hz, the number of right-eye images displayed in one second is 30, and the number of left-eye images displayed in one second is 30, and hence 30 3D images are displayed in one second. In the present embodiment, the field frequency is set to be twice (for example, 120 Hz) the usual value, and image flicker apt to occur when an image of a low field frequency is displayed is reduced.

The user views a 3D image displayed on panel 10 through shutter glasses 50 for independently opening and closing right-eye shutter 52R and left-eye shutter 52L synchronously with the right-eye field and the left-eye field. Thus, the user can observe the right-eye image only with the right eye and can observe the left-eye image only with the left eye, so that the 3D image displayed on panel 10 can be viewed three-dimensionally.

Only the image signal to be displayed differs between the right-eye field and the left-eye field. The structure of one field such as the number of subfields constituting the field, the luminance weight of each subfield, and the arrangement of the subfields is the same between the right-eye field and the left-eye field. When distinction is not required between the right-eye field and left-eye field, each of the right-eye field and left-eye field is simply referred to as a field. Each of the right-eye image and left-eye image is simply referred to as an image signal. The structure of a field is also referred to as a subfield structure.

First, the structure of one field and a driving voltage waveform to be applied to each electrode are described. Each of the right-eye field and left-eye field has a plurality of subfields, and each subfield has an initializing period, an address period, and a sustain period.

In the initializing period, an initializing operation of causing the initializing discharge in a discharge cell and producing, on each electrode, wall charge required for address discharge in the subsequent address period is performed. The initializing operation includes the following operations:

a forced initializing operation of causing initializing discharge in a discharge cell regardless of the operation in the immediately preceding subfield; and
a selective initializing operation of causing initializing discharge only in a discharge cell having undergone address discharge in the address period in the immediately preceding subfield.

In the address period, the address operation is performed where a scan pulse is applied to scan electrodes 22, an address pulse is selectively applied to data electrodes 32, address discharge is selectively caused in a discharge cell to emit light, and wall charge for generating sustain discharge in the subsequent sustain period is produced in the discharge cell.

In the sustain period, the sustain operation is performed where as many sustain pulses as the number derived by multiplying the luminance weight set for each subfield by a predetermined luminance are alternately applied to scan electrode 22 and sustain electrode 23, sustain discharge is caused in the discharge cell having undergone address discharge in the immediately preceding address period, and light is emitted in the discharge cell. This proportionality coefficient is luminance magnification. For example, when the luminance magnification is two, four sustain pulses are applied to each of scan electrode 22 and sustain electrode 23 in the sustain period of the subfield of luminance weight "2". Therefore, the number of sustain pulses occurring in the sustain period is 8.

In the present exemplary embodiment, an example where one field is constituted by five subfields (subfield SF1, subfield SF2, ..., subfield SF5) is described.

Subfield SF1 through subfield SF5 have luminance weights of (16, 8, 4, 2, 1). Thus, in the present exemplary embodiment, the luminance weights of respective subfields are set in descending order: the luminance weight of subfield SF1, which is the first subfield in the field, is the largest, and the luminance weights of the subsequent subfields decrease sequentially.

In the present exemplary embodiment, in the initializing period of subfield SF5, which is the final subfield in the field, a forced initializing operation of causing initializing discharge in a discharge cell regardless of the operation of the immediately preceding subfield is performed. In the initializing period of subfield SF1 through subfield SF4, a selective initializing operation of causing initializing discharge only in a discharge cell having undergone address discharge in the immediately preceding subfield is performed. Thus, light emission related to no image display is only light emission by the discharge of the forced initializing operation in subfield SF5. The luminance of black level, which is the luminance in a black display region that does not cause sustain discharge, is therefore obtained only by weak light emission in the forced initializing operation. This allows display of an image of sharp contrast on panel 10.

In the present exemplary embodiment, however, the number of subfields constituting one field and the luminance weight of each subfield are not limited to the above-mentioned values. The subfield structure may be changed based on an image signal or the like.

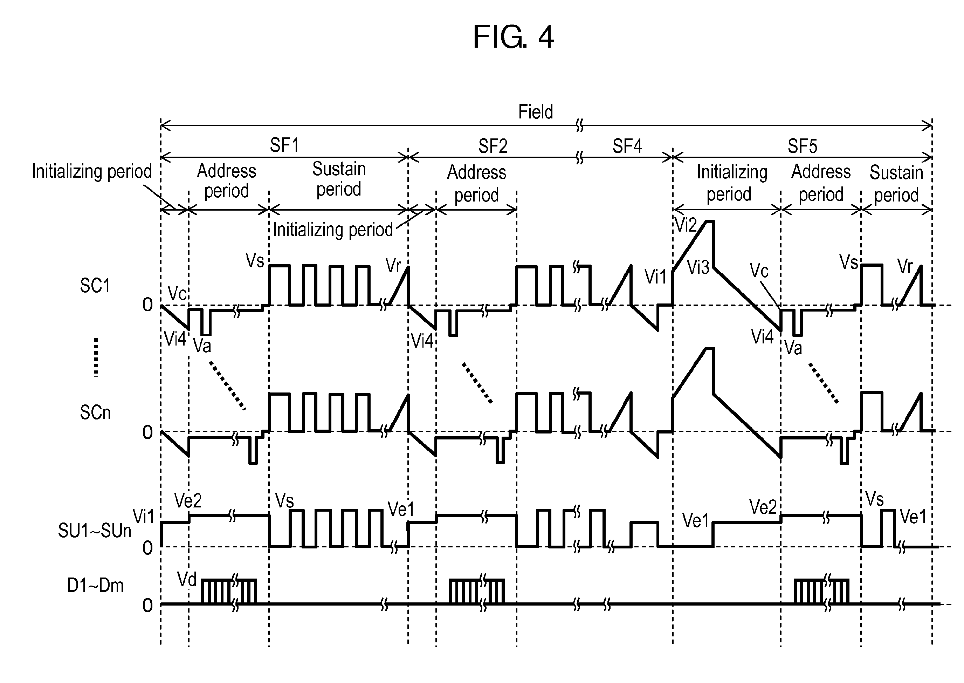

Fig. 4 is a diagram showing a driving voltage waveform to be applied to each electrode of panel 10 used in the plasma display apparatus in accordance with the first exemplary embodiment of the present invention. Fig. 4 shows driving voltage waveforms applied to scan electrode SC1 for firstly performing an address operation in the address period, scan electrode SCn for finally performing the address operation in the address period, sustain electrode SU1 through sustain electrode SUn, and data electrode D1 through data electrode Dm.

Fig. 4 shows driving voltage waveforms mainly of subfield SF1 and subfield SF5. The forced initializing operation is performed in subfield SF5, and the selective initializing operation is performed in subfield SF1 through subfield SF4. Therefore, the waveform of the driving voltage to be applied to scan electrode 22 in the initializing period differs between subfield SF5 and subfield SF1 through subfield SF4.

The driving voltage waveforms in subfield SF2 through subfield SF4 are substantially similar to the driving voltage waveform in subfield SF1 except that the number of sustain pulses in the sustain period is changed. Scan electrode SCi, sustain electrode SUi, and data electrode Dk described later are selected from the electrodes based on image data (which indicates light emission or no light emission in each subfield).

First, subfield SF1 is described.

In the initializing period of subfield SF1, voltage Ve1 is applied to sustain electrode SU1 through sustain electrode SUn and voltage 0 (V) is applied to data electrode D1 through data electrode Dm. Ramp waveform voltage, which gently decreases from voltage (for example, voltage 0 (V)) lower than a discharge start voltage to voltage Vi4 of negative polarity, is applied to scan electrode SC1 through scan electrode SCn. Voltage Vi4 is set to exceed the discharge start voltage with respect to sustain electrode SU1 through sustain electrode SUn.

While the ramp waveform voltage is applied to scan electrode SC1 through scan electrode SCn, feeble initializing discharge occurs in the discharge cell having undergone sustain discharge in the sustain period in the immediately preceding subfield (in this case, subfield SF5 as the final subfield in the immediately preceding field (not shown in Fig. 4)). This initializing discharge reduces the wall voltage on scan electrode SCi and sustain electrode SUi. On data electrode Dk, sufficient wall voltage of positive polarity is accumulated by the sustain discharge occurring in the sustain period in the immediately preceding subfield. Therefore, the excessive part of the wall voltage is discharged, and the wall voltage on data electrode Dk is adjusted to wall voltage suitable for the address operation. The wall voltage on the electrode means voltage generated by the wall charge accumulated on the dielectric layer for covering the electrodes, the protective layer, or the phosphor layers.

While, in the discharge cell having undergone no sustain discharge in the sustain period of the immediately preceding subfield (subfield SF5), no initializing discharge occurs and the wall voltage is kept as it is.

Thus, the initializing operation in subfield SF1 becomes a selective initializing operation of selectively causing initializing discharge in the discharge cell that has undergone address operation in the address period of the immediately preceding subfield, namely in the discharge cell that has undergone sustain discharge in the sustain period of the immediately preceding subfield.

Thus, the initializing operation in the initializing period in subfield SF1, namely the selective initializing operation, is completed.

In the subsequent address period in subfield SF1, voltage Ve2 is applied to sustain electrode SU1 through sustain electrode SUn, and voltage Vc is applied to scan electrode SC1 through scan electrode SCn.

Next, a scan pulse of negative polarity of negative voltage Va is applied to scan electrode SC1 in the first row firstly undergoing address operation. Then, an address pulse of positive polarity of positive voltage Vd is applied to data electrode Dk in the discharge cell to emit light in the first row, of data electrode D1 through data electrode Dm.

The voltage difference in the intersecting part of data electrode Dk and scan electrode SC1 in the discharge cell to which the address pulse of voltage Vd has been applied is derived by adding the difference between the wall voltage on data electrode Dk and that on scan electrode SC1 to the difference (voltage Vd - voltage Va) of the external applied voltage. Thus, the voltage difference between data electrode Dk and scan electrode SC1 exceeds the discharge start voltage, and discharge occurs between data electrode Dk and scan electrode SC1.

Since voltage Ve2 is applied to sustain electrode SU1 through sustain electrode SUn, the voltage difference between sustain electrode SU1 and scan electrode SC1 is derived by adding the difference between the wall voltage on sustain electrode SU1 and that on scan electrode SC1 to the difference (voltage Ve2 - voltage Va) of the external applied voltage. At this time, by setting voltage Ve2 at a voltage value slightly lower than the discharge start voltage, a state where discharge does not occur but is apt to occur can be caused between sustain electrode SU1 and scan electrode SC1.

Therefore, the discharge occurring between data electrode Dk and scan electrode SC1 can cause discharge between sustain electrode SU1 and scan electrode SC1 that exist in a region crossing data electrode Dk. Thus, address discharge occurs in the discharge cell to emit light, wall voltage of positive polarity is accumulated on scan electrode SC1, wall voltage of negative polarity is accumulated on sustain electrode SU1, and wall voltage of negative polarity is also accumulated on data electrode Dk.

Thus, the address operation of causing address discharge in the discharge cell to emit light in the first row and accumulating wall voltage on each electrode is performed. The voltage in the part where scan electrode SC1 intersects with data electrode 32 to which no address pulse has been applied does not exceed the discharge start voltage, so that address discharge does not occur.

This address operation is sequentially performed until it reaches the discharge cell in the n-th row in the order of scan electrode SC2, scan electrode SC3, ... , and scan electrode SCn, and the address period in subfield SF1 is completed. Thus, in the address period, address discharge is selectively caused in the discharge cell to emit light, and wall charge is formed in the discharge cell.

In the subsequent sustain period in subfield SF1, voltage 0 (V) is applied to sustain electrode SU1 through sustain electrode SUn, and a sustain pulse of voltage Vs of positive polarity is applied to scan electrode SC1 through scan electrode SCn. In the discharge cell having undergone address discharge, the voltage difference between scan electrode SCi and sustain electrode SUi is obtained by adding the difference between the wall voltage on scan electrode SCi and that on sustain electrode SUi to voltage Vs of the sustain pulse.

Thus, the voltage difference between scan electrode SCi and sustain electrode SUi exceeds the discharge start voltage, and sustain discharge occurs between scan electrode SCi and sustain electrode SUi. Ultraviolet rays generated by this discharge cause phosphor layer 35 to emit light. Wall voltage of negative polarity is accumulated on scan electrode SCi, and wall voltage of positive polarity is accumulated on sustain electrode SUi. Wall voltage of positive polarity is also accumulated on data electrode Dk. In the discharge cell having undergone no address discharge in the address period, sustain discharge does not occur and the wall voltage at the end of the initializing period is kept.

Subsequently, 0 (V) is applied to scan electrode SC1 through scan electrode SCn, and a sustain pulse of voltage Vs is applied to sustain electrode SU1 through sustain electrode SUn. In the discharge cell having undergone the sustain discharge, the voltage difference between sustain electrode SUi and scan electrode SCi exceeds the discharge start voltage. Thus, sustain discharge occurs between sustain electrode SUi and scan electrode SCi again, wall voltage of negative polarity is accumulated on sustain electrode SUi, and wall voltage of positive polarity is accumulated on scan electrode SCi.

Hereinafter, similarly, as many sustain pulses as the number derived by multiplying the luminance weight by a predetermined luminance magnification are alternately applied to scan electrode SC1 through scan electrode SCn and sustain electrode SU1 through sustain electrode SUn. Thus, by applying the potential difference between the electrodes of display electrode pair 24, sustain discharge is continuously performed in the discharge cell having undergone the address discharge in the address period.

After generation of a sustain pulse in the sustain period (end of the sustain period), ramp waveform voltage, which gently increases from voltage 0 (V) as base potential to voltage Vr, is applied to scan electrode SC1 through scan electrode SCn while 0 (V) is applied to sustain electrode SU1 through sustain electrode SUn and data electrode D1 through data electrode Dm.

While the ramp waveform voltage applied to scan electrode SC1 through scan electrode SCn increases beyond the discharge start voltage, feeble discharge continuously occurs in the discharge cell having undergone sustain discharge. Charged particles generated by the feeble discharge are accumulated on sustain electrode SUi and scan electrode SCi so as to reduce the voltage difference between sustain electrode SUi and scan electrode SCi. Therefore, the wall voltage on scan electrode SCi and sustain electrode SUi is reduced while the wall voltage of positive polarity is left on data electrode Dk.

When the voltage applied to scan electrode SC1 through scan electrode SCn arrives at voltage Vr, the apply voltage to scan electrode SC1 through scan electrode SCn is decreased to 0 (V). Thus, the sustain operation in the sustain period in subfield SF1 is completed.

Thus, subfield SF1 is completed.

In the initializing period of subfield SF2, a driving voltage waveform similar to that in the initializing period of subfield SF1 is applied to each electrode, and the selective initializing operation is performed. Also in the subsequent address period, a driving voltage waveform similar to that in the address period of subfield SF1 is applied to each electrode, and the address operation is performed. Also in the subsequent sustain period, a driving voltage waveform that is similar to that in the sustain period of subfield SF1 except the number of sustain pulses is applied to each electrode, and the sustain operation is performed. Also in subfield SF3 and subfield SF4, a driving voltage waveform that is similar to that in subfield SF1 except the number of sustain pulses occurring in the sustain period is applied to each electrode.

In the first half of the initializing period of subfield SF5 existing at the end of the field, 0 (V) is applied to data electrode D1 through data electrode Dm and sustain electrode SU1 through sustain electrode SUn. Voltage Vi1 is applied to scan electrode SC1 through scan electrode SCn, and ramp waveform voltage gently increasing from voltage Vi1 to voltage Vi2 is applied to them. Voltage Vi1 is set at the voltage lower than the discharge start voltage with respect to sustain electrode SU1 through sustain electrode SUn. Voltage Vi2 is set at the voltage exceeding the discharge start voltage.

While the ramp waveform voltage increases, feeble initializing discharge continuously occurs between scan electrode SC1 through scan electrode SCn and sustain electrode SU1 through sustain electrode SUn, and feeble initializing discharge continuously occurs between scan electrode SC1 through scan electrode SCn and data electrode D1 through data electrode Dm. Then, wall voltage of negative polarity is accumulated on scan electrode SC1 through scan electrode SCn, and wall voltage of positive polarity is accumulated on data electrode D1 through data electrode Dm and sustain electrode SU1 through sustain electrode SUn.

In the latter half of the initializing period of subfield SF5, voltage Ve1 of positive polarity is applied to sustain electrode SU1 through sustain electrode SUn, and voltage 0 (V) is applied to data electrode D1 through data electrode Dm. Ramp waveform voltage, which gently decreases from voltage Vi3 to voltage Vi4 of negative polarity, is applied to scan electrode SC1 through scan electrode SCn. Voltage Vi3 is set at the voltage lower than the discharge start voltage with respect to sustain electrode SU1 through sustain electrode SUn, and voltage Vi4 is set at the voltage exceeding the discharge start voltage.

While the ramp waveform voltage is applied to scan electrode SC1 through scan electrode SCn, feeble initializing discharge occurs between scan electrode SC1 through scan electrode SCn and sustain electrode SU1 through sustain electrode SUn, and feeble initializing discharge continuously occurs between scan electrode SC1 through scan electrode SCn and data electrode D1 through data electrode Dm. Then, the wall voltage of negative polarity accumulated on scan electrode SC1 through scan electrode SCn and the wall voltage of positive polarity accumulated on sustain electrode SU1 through sustain electrode SUn are reduced, and the wall voltage of positive polarity accumulated on data electrode D1 through data electrode Dm is adjusted to a value suitable for address operation.

Thus, the initializing operation in the initializing period of subfield SF5, namely the forced initializing operation of forcibly causing initializing discharge in all discharge cells, is completed.

In the address period of subfield SF5, the address operation is performed where a driving voltage waveform similar to that in the address period of subfield SF1 through subfield SF4 is applied to each electrode, and wall voltage is accumulated on each electrode of the discharge cell to emit light.

In the sustain period of subfield SF5, similarly to the sustain periods of subfield SF1 through subfield SF4, as many sustain pulses as the number corresponding to the luminance weight are alternately applied to scan electrode SC1 through scan electrode SCn and sustain electrode SU1 through sustain electrode SUn, and sustain discharge is caused in the discharge cell that has undergone address discharge in the address period. After generation of a sustain pulse (end of the sustain period), ramp waveform voltage, which gently increases from voltage 0 (V) to voltage Vr, is applied to scan electrode SC1 through scan electrode SCn.

The driving voltage waveform applied to each electrode of panel 10 of the present exemplary embodiment has been described schematically.

Thus, in the present exemplary embodiment, the luminance weights of respective subfields are set in descending order: the luminance weight of subfield SF1, which is the first subfield in the field, is the largest, the luminance weights of the subsequent subfields decrease sequentially, and the luminance weight of subfield SF5, which is the final subfield in the field, is the smallest.

In the initializing period of subfield SF5, which is the final subfield in the field, a forced initializing operation of causing initializing discharge in a discharge cell regardless of the operation of the immediately preceding subfield is performed. In the initializing period of subfield SF1 through subfield SF4, a selective initializing operation of causing initializing discharge only in a discharge cell that has undergone address discharge in the immediately preceding subfield is performed.

In the present embodiment, the following voltage values are applied to respective electrodes, for example. Voltage Vi1 is 145 (V), voltage Vi2 is 335 (V), voltage Vi3 is 190 (V), voltage Vi4 is -160 (V), voltage Va is -180 (V), voltage Vc is -35 (V), voltage Vs is 190 (V), voltage Vr is 190 (V), voltage Ve1 is 125 (V), voltage Ve2 is 130 (V), and voltage Vd is 60 (V).

In the present embodiment, the gradient of the up-ramp waveform voltage applied to scan electrode SC1 through scan electrode SCn in the initializing period of subfield SF5 is set at 1.5 (V/μsec), and the gradient of the down-ramp waveform voltage applied to them is set at -2.5 (V/μsec). The gradient of the down-ramp waveform voltage applied to scan electrode SC1 through scan electrode SCn in the initializing period of subfield SF1 through subfield SF4 is set at -2.5 (V/μsec).

The specific numerical values of the voltage values and gradients are simply one example, and the voltage values and gradients of the present invention are not limited to the above-mentioned numerical values. Preferably, the voltage values and gradients are set at optimal values based on the discharge characteristics of the panel and the specification of the plasma display apparatus.

Next, the subfield structure in one field period for driving the plasma display apparatus of the present exemplary embodiment is described.

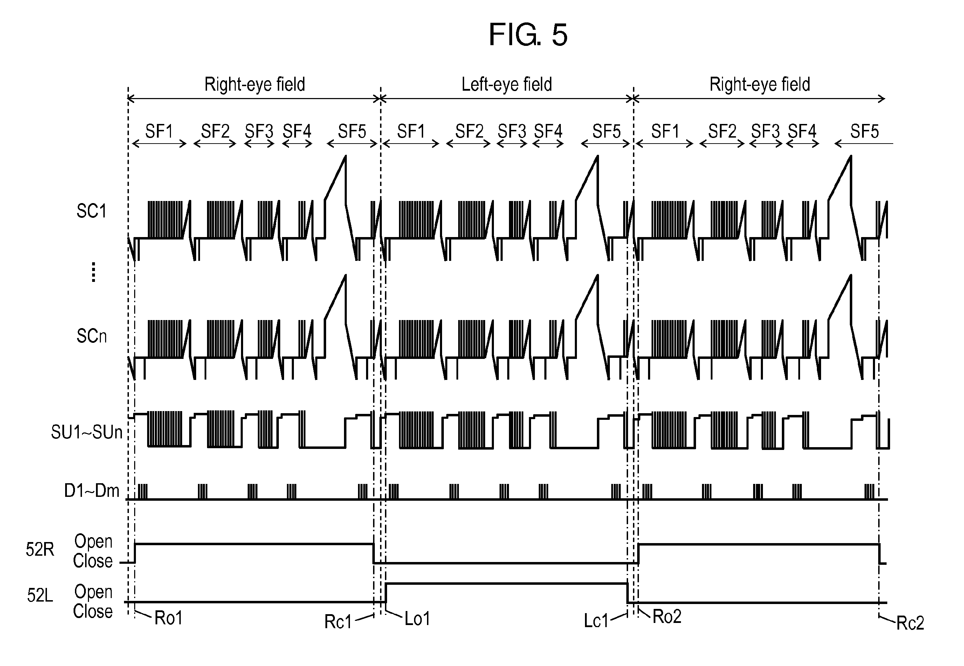

Fig. 5 is a diagram for schematically showing a subfield structure of plasma display apparatus 40 and an opening/closing operation of shutter glasses 50 in accordance with the first exemplary embodiment of the present invention.

Fig. 5 shows driving voltage waveforms applied to scan electrode SC1 for firstly performing an address operation in the address period, scan electrode SCn for finally performing the address operation in the address period, sustain electrode SU1 through sustain electrode SUn, and data electrode D1 through data electrode Dm, and the opening/closing operations of right-eye shutter 52R and left-eye shutter 52L. Fig. 5 shows three fields.

In the present exemplary embodiment, in order to display a 3D image on panel 10, the right-eye field and the left-eye field are generated alternately. For example, of the three fields of Fig. 5, the first field and the third field are right-eye fields and display a right-eye image signal on panel 10. The second field is a left-eye field and displays a left-eye image signal on panel 10.

A user who views a 3D image displayed on panel 10 through shutter glasses 50 recognizes images (right-eye image and left-eye image) displayed in two fields as one 3D image. Therefore, the number of images displayed on panel 10 per second that are observed by the user is a half the number of fields displayed per second. For example, when the field frequency (the number of fields generated per second) of the 3D image displayed on the panel is 60 Hz, the user observes 30 3D images per second. Therefore, in order to display 60 3D images per second, the field frequency must be set at 120 Hz, namely twice 60 Hz. In the present exemplary embodiment, the field frequency (the number of fields generated per second) is set to be twice the normal frequency (for example, 120 Hz) so that the user observes 3D moving images smoothly.

Each of the right-eye field and left-eye field has five subfields (subfield SF1, subfield SF2, subfield SF3, subfield SF4, subfield SF5). Subfield SF1 through subfield SF5 have luminance weights of (16, 8, 4, 2, 1).

Thus, one field is constituted by five subfields that have luminance weights in descending order, namely the luminance weights sequentially decrease as subfields are sequentially generated. In other words, the subfield of the largest luminance weight is generated firstly in the field, the subfield of the second-largest luminance weight is generated secondly, the subfield of the third-largest luminance weight is generated thirdly, the subfield of the fourth-largest luminance weight is generated fourthly, and the subfield of the smallest luminance weight is generated finally in the field. The forced initializing operation is performed in the initializing period of the subfield generated finally in the field, and the selective initializing operation is performed in the initializing periods of the other subfields.

The opening/closing operation of right-eye shutter 52R and left-eye shutter 52L of shutter glasses 50 is controlled as follows, based on the ON or OFF of the shutter control signal that is output from control signal output section 46 and is received by shutter glasses 50.

Shutter glasses 50 open right-eye shutter 52R synchronously with start time Ro of the address period of subfield SF1 of the right-eye field, and close right-eye shutter 52R synchronously with end time Rc of the sustain period of subfield SF5 of the right-eye field. Shutter glasses 50 open left-eye shutter 52L synchronously with start time Lo of the address period of subfield SF1 of the left-eye field, and close left-eye shutter 52L synchronously with end time Lc of the sustain period of subfield SF5 of the left-eye field.

Therefore, in shutter glasses 50, left-eye shutter 52L closes while right-eye shutter 52R is opened, and right-eye shutter 52R closes while left-eye shutter 52L is opened. In either of the right-eye field and the left-eye field, both of right-eye shutter 52R and left-eye shutter 52L are closed while the forced initializing operation is performed.

Right-eye shutter 52R and left-eye shutter 52L repeat similar operation in each field.

Thus, in the plasma display system of the exemplary embodiment, light emission caused by the forced initializing operation is blocked by right-eye shutter 52R and left-eye shutter 52L, and is prevented from entering the eyes of the user. Therefore, the user who views a 3D image through shutter glasses 50 cannot see light emission by the forced initializing operation, and the luminance corresponding to the light emission is reduced at the luminance of black level. Thus, the user can view the image of sharp contrast of low luminance of black level.

Timing generation circuit 45 generates a timing signal so that control signal output section 46 outputs a shutter control signal used for opening/closing operation of right-eye shutter 52R and left-eye shutter 52L, and supplies it to control signal output section 46.

In the present exemplary embodiment, the "shutter closed" state is not limited to the completely closed state of right-eye shutter 52R and left-eye shutter 52L. The "shutter opened" state is not limited to the completely opened state of right-eye shutter 52R and left-eye shutter 52L.

In the present exemplary embodiment, by driving panel 10 by generating each subfield as discussed above and controlling shutter glasses 50, a high-quality 3D image where the occurring of crosstalk is suppressed can be provided for the user who views the 3D image displayed on panel 10 through shutter glasses 50. The reason is described below.

Phosphor layer 35 used in panel 10 has afterglow characteristics depending on the material constituting the phosphor. The afterglow means the phenomenon where the phosphor continues the light emission even after the end of discharge. The intensity of the afterglow is proportional to the luminance during the light emission of the phosphors. As the luminance during light emission of the phosphor becomes high, the afterglow becomes strong. There is also a phosphor material having the following characteristics: the afterglow attenuates at a time constant corresponding to the characteristics of the phosphor, and the luminance gradually decreases with the passage of time, but the afterglow continues for several milliseconds even after the completion of sustain discharge. As the luminance during light emission of the phosphor becomes high, the time required for the attenuation becomes long.

The light emission occurring in a subfield of a large luminance weight has a luminance higher than that of the light emission occurring in a subfield of a small luminance weight. Therefore, the afterglow by the light emission occurring in a subfield of a large luminance weight has a luminance higher than that of the afterglow by the light emission occurring in a subfield of a small luminance weight, and the time required for the attenuation is long.

Therefore, when the final subfield of one field is set as the subfield of a large luminance weight, the afterglow leaking to the subsequent field is larger than that when the final subfield is set as the subfield of a small luminance weight.

In plasma display apparatus 40 for displaying a 3D image on panel 10 by alternately generating a right-eye field and a left-eye field, when the afterglow occurring in one field leaks to the subsequent field, a user observes the afterglow as unnecessary light emission related to no image signal. This phenomenon is crosstalk.

Therefore, as the afterglow leaking from one field to the next field increases, the crosstalk degrades, 3D vision of the 3D image is disturbed, and the image display quality in plasma display apparatus 40 reduces. This image display quality means image display quality for a user who views the 3D image through shutter glasses 50.

In order to reduce the afterglow leaking from one field to the next field and reduce the crosstalk, preferably, a subfield of a large luminance weight is generated in an early time of the one field, and strong afterglow is converged in the one field as much as possible.

In other words, the subfield having the largest luminance weight is generated firstly in the field, the luminance weights of the subsequent subfields are sequentially decreased, and the subfield having the smallest luminance weight is generated at the end of the field. Thus, preferably, the leak of the afterglow to the next field is minimized.

In the present exemplary embodiment, in order to suppress the crosstalk, subfield SF1 is set to have the largest luminance weight, and the luminance weights of the subsequent subfields are sequentially decreased.

Even when one field is constituted as discussed above and subfields are generated, however, it is difficult to completely suppress the afterglow of the phosphor leaking to the next field. In the present exemplary embodiment, image signal processing circuit 41 includes afterglow suppressing circuit 48 in order to suppress the crosstalk by preventing a user from visually recognizing an afterimage when the afterglow occurs.

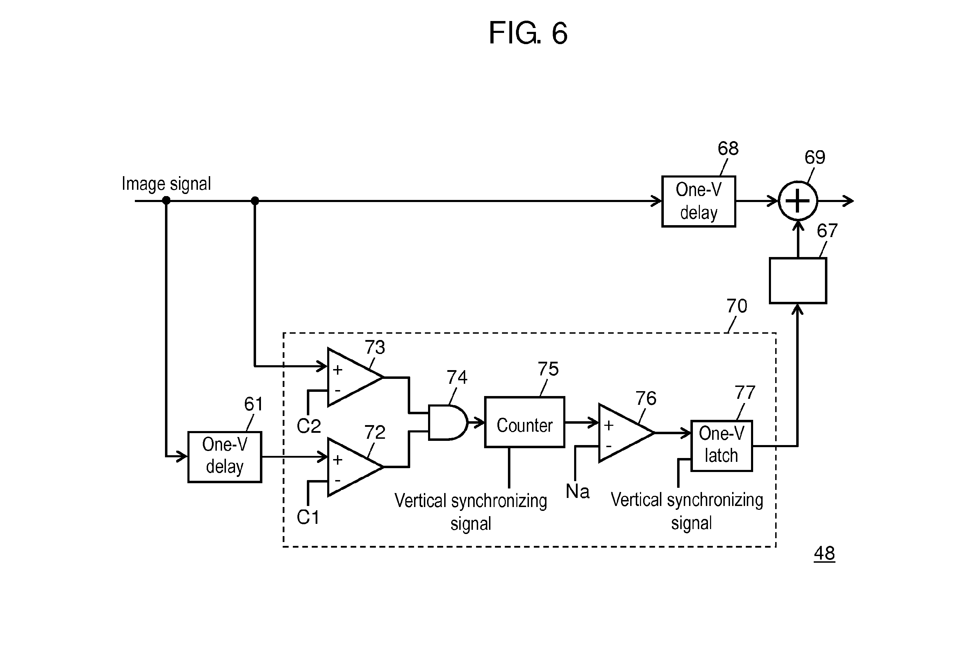

Fig. 6 is a circuit block diagram of one configuration example of afterglow suppressing circuit 48 of plasma display apparatus 40 in accordance with the first exemplary embodiment of the present invention. Afterglow suppressing circuit 48 includes one-vertical synchronizing period delay section (hereinafter referred to as "one-V delay") 61, addition value setting section 67, one-V delay 68, adder 69, and afterglow detecting circuit 70. Afterglow detecting circuit 70 includes comparator 72 for a preceding field, comparator 73 for the present field, AND gate 74, counter 75, number-of-afterimage-pixels comparator 76, and one-V latch 77.

In the present exemplary embodiment, a signal to be processed by afterglow detecting circuit 70 is a luminance signal. Therefore, in the present exemplary embodiment, an image signal (red image signal, green image signal, or blue image signal) is converted into a luminance signal, and is input to afterglow detecting circuit 70. Gradation value (Y) of luminance can be calculated by substituting gradation value (R) of the red image signal, gradation value (G) of the green image signal, and gradation value (B) of the blue image signal into the following calculation equation, for example.

$$Y=0.299\times R+0.587\times G+0.114\times B$$

Here, Fig. 6 does not show the circuit block for calculating gradation value (Y) of luminance. The calculation equation for determining the gradation value of luminance is not limited to this, but the gradation value of luminance may be calculated by the other calculation equation.

One-V delay 61 receives an image signal (luminance signal), and delays the input image signal (luminance signal) by the one-vertical synchronizing period. Therefore, when the input image signal (luminance signal) is assumed to be the image signal (luminance signal) of a certain field (present field), the image signal (luminance signal) delayed by one-V delay 61 by the one-vertical synchronizing period is the image signal (luminance signal) in the field before the certain field by one field. Here, the field before the certain field by one field is the preceding field. For example, when the image signal (luminance signal) of the present field is a right-eye image signal (luminance signal), the image signal (luminance signal) of the preceding field output from one-V delay 61 is a left-eye image signal (luminance signal). When the image signal (luminance signal) of the present field is a left-eye image signal (luminance signal), the image signal (luminance signal) of the preceding field output from one-V delay 61 is a right-eye image signal (luminance signal).

Comparator 72 for the preceding field compares the gradation value of the luminance of the image signal of the preceding field with high-gradation threshold value C1 for each pixel. Comparator 72 for the preceding field outputs a high-level signal (hereinafter referred to as "H") when the gradation value of the luminance of the image signal of the preceding field is equal to or higher than high-gradation threshold value C1, or outputs a low-level signal (hereinafter referred to as "L") when the gradation value is lower than high-gradation threshold value C1.

Comparator 73 for the present field compares the gradation value of the luminance of the image signal of the present field with low-gradation threshold value C2 for each pixel. Comparator 73 for the present field outputs "H" when the gradation value of the luminance of the image signal of the present field is equal to or lower than low-gradation threshold value C2, or outputs "L" when the gradation value is higher than low-gradation threshold value C2. In the present exemplary embodiment, low-gradation threshold value C2 is set at "0". Therefore, comparator 73 for the present field outputs "H" only when the image signal of the present field displays black, namely when the gradation value of the luminance is "0".

AND gate 74 performs the logical product operation of the output of comparator 72 for the preceding field and the output of comparator 73 for the present field, and outputs the result. Therefore, AND gate 74 outputs "H" when both of the output of comparator 72 for the preceding field and the output of comparator 73 for the present field are "H". In other words, AND gate 74 outputs "H" when the gradation value of the luminance of the image signal of the preceding field is equal to or higher than high-gradation threshold value C1 and the gradation value of the luminance of the image signal of the present field is equal to or lower than low-gradation threshold value C2. Otherwise, AND gate 74 outputs "L".

Counter 75 counts the output of AND gate 74 in each field. Counter 75 therefore counts, in each field, the number of pixels where the output of AND gate 74 is "H". Counter 75 is reset in response to a vertical synchronizing signal.

Number-of-afterimage-pixels comparator 76 compares the output of counter 75 with number-of-pixels threshold Na, and outputs "H" when the output of counter 75 is equal to or larger than number-of-pixels threshold Na. Number-of-afterimage-pixels comparator 76 therefore outputs "H" in a field in which the number of pixels where the output of AND gate 74 is "H" is equal to or larger than number-of-pixels threshold Na.

One-V latch 77 holds, based on the vertical synchronizing signal, the output of number-of-afterimage-pixels comparator 76 in the result obtained by counting of the output of AND gate 74 in one field period by counter 75. In other words, one-V latch 77 latches the final output in one field of number-of-afterimage-pixels comparator 76 using the vertical synchronizing signal. The output of one-V latch 77 keeps the final output in one field of number-of-afterimage-pixels comparator 76 for the next one field period.

Therefore, when a field occurs in which the number of pixels where the output of AND gate 74 is "H" is equal to or larger than number-of-pixels threshold Na, namely when a field in which the final output in one field of counter 75 is equal to or larger than number-of-pixels threshold Na occurs, one-V latch 77 outputs "H" for one field period in the field next to the occurring field. When a field occurs in which the number of pixels where the output of AND gate 74 is "H" is lower than number-of-pixels threshold Na, namely when a field in which the output of counter 75 is lower than number-of-pixels threshold Na occurs, one-V latch 77 outputs "L" for one field period in the field next to the occurring field.

Afterglow is apt to be conspicuous in the pixel that emits bright light in the preceding field and emits dark light in the present field. Therefore, by counting the number of pixels that emit bright light in the preceding field and emit dark light in the present field and comparing the counting result with number-of-pixels threshold Na, it can be determined whether the area of the region where afterglow occurs in the present field is large. Thus, afterglow detecting circuit 70 detects the field where the area of the afterglow occurring region is large.

Addition value setting section 67 outputs "0" when the output of one-V latch 77 is "L", and outputs "predetermined gradation value K" when the output of one-V latch 77 is "H". The output of addition value setting section 67 is supplied as the addition value to subsequent adder 69. Preferably, predetermined gradation value K is set at a value that is equivalent to the intensity of the afterglow or slightly brighter than the afterglow. In the present embodiment, predetermined gradation value K is set at a value equivalent to gradation value "3".

One-V delay 68 receives an image signal (red image signal, green image signal, or blue image signal), and delays the input image signal by one-vertical synchronizing period.

Thus, one-V latch 77 outputs the arithmetic result of the field one field before. In other words, one-V latch 77 outputs "H" in the next field, namely the field one field after, when the number of pixels satisfying the following conditions is equal to or larger than number-of-pixels threshold Na:

the gradation value of the luminance of the image signal of the preceding field is equal to or higher than high-gradation threshold value C1; and
the gradation value of the luminance of the image signal of the present field is equal to or lower than low-gradation threshold value C2.

Therefore, the timing of the image signal must be matched with that of the output of one-V latch 77. One-V delay 68 aligns the phases of the image signal of the present field and the output of one-V latch 77 by delaying the input image signal (red image signal, green image signal, or blue image signal) of the present field by one-vertical synchronizing period.

Adder 69 adds the output of addition value setting section 67 to the gradation value of the luminance of the image signal of the present field that is delayed by one-vertical synchronizing period by one-V delay 68.

The image signal (red image signal, green image signal, or blue image signal) output from one-V delay 68 is temporarily converted into a luminance signal (Y) and a color difference signal (C-Y signal, U and V signals, R-Y and B-Y signals, or Cr and Cb signals). This operation is not shown in Fig. 6. Adder 69 adds the output of addition value setting section 67 to the luminance signal. Afterglow suppressing circuit 48 converts the color difference signal and the luminance signal to which the output of addition value setting section 67 is added into the red image signal, green image signal, and blue image signal again, and supplies it to subsequent image data converting circuit 49.

Therefore, the image signal output from afterglow suppressing circuit 48 is an image signal whose luminance is increased by predetermined gradation value K in the field where the number of pixels satisfying the following conditions is equal to or larger than number-of-pixels threshold Na:

the gradation value of the luminance of the image signal of the preceding field is equal to or higher than high-gradation threshold value C1; and

the gradation value of the luminance of the image signal of the present field is equal to or lower than low-gradation threshold value C2.

Next, the operation of afterglow suppressing circuit 48 is described. In the present exemplary embodiment, it is assumed that the image signal of the present field is a left-eye image signal and the image signal of the preceding field is a right-eye image signal.

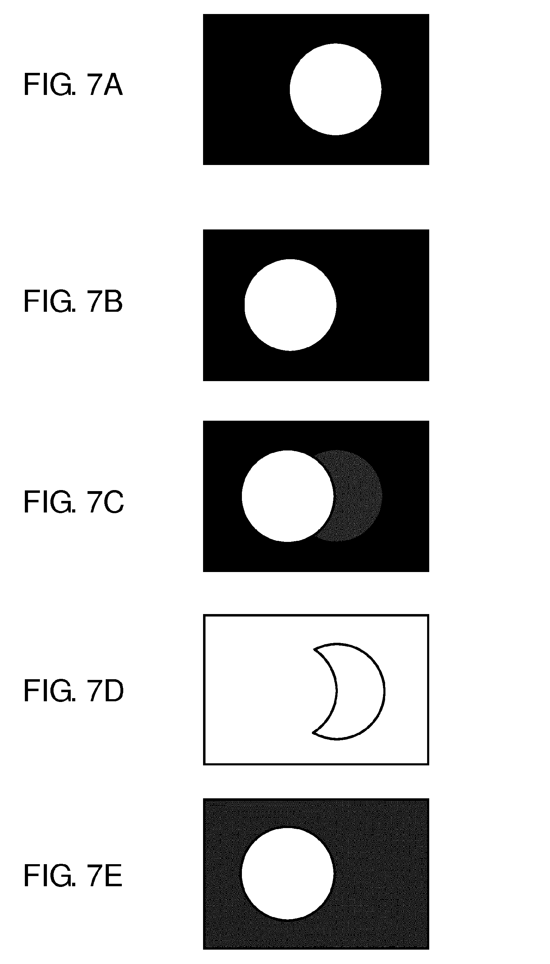

Fig. 7A, Fig. 7B, Fig. 7C, Fig. 7D, and Fig. 7E are diagrams for schematically showing one example of the image signal and the appearance of a display image when the image signal is displayed on panel 10. Fig. 7A is a diagram for schematically showing one example of a right-eye image displayed in a right-eye field. Fig. 7B is a diagram for schematically showing one example of a left-eye image displayed in a left-eye field.

When it is assumed that the preceding field has the right-eye image signal shown in Fig. 7A and the present field has the left-eye image signal shown in Fig. 7B, the left-eye image signal of Fig. 7B is displayed on panel 10 after the right-eye image signal of Fig. 7A is displayed on it.

Fig. 7C is a diagram for schematically showing one example of the appearance of the display image on panel 10 when crosstalk of the afterimage of the right-eye image into the left-eye image occurs.

For example, when the image signals shown in Fig. 7A and Fig. 7B are displayed on panel 10 without the image signal processing of afterglow suppressing circuit 48 described in the present exemplary embodiment, the afterglow when the right-eye image is displayed on panel 10 remains as an afterimage and crosstalk of the right-eye image into the left-eye image can occur as shown in the example of Fig. 7C. When such crosstalk occurs, the crosstalk disturbs the 3D vision by a user who views the 3D image displayed on panel 10 through shutter glasses 50.

In the present exemplary embodiment, however, afterglow suppressing circuit 48 operates as follows. When the left-eye image signal of the present field shown in Fig. 7B is input to afterglow suppressing circuit 48, the right-eye image signal of the preceding field shown in Fig. 7A is output from one-V delay 61.

Comparator 72 for the preceding field outputs "H" when the gradation value (in the example of Fig. 7A, the gradation value of the luminance of the right-eye image signal) of the luminance of the image signal of the preceding field is equal to or higher than high-gradation threshold value C1. In the example of Fig. 7A, comparator 72 for the preceding field therefore outputs "H" for an image signal corresponding to a pixel of the region (light emission region) shown by the white round, and outputs "L" for an image signal corresponding to a pixel of the region (no light emission region) outside the round.

Comparator 73 for the present field outputs "H" when the gradation value (in the example of Fig. 7B, the gradation value of the luminance of the left-eye image signal) of the luminance of the image signal of the present field is equal to or lower than low-gradation threshold value C2. In the present embodiment, a pixel satisfying this condition displays black having a gradation value of luminance of "0". In the example of Fig. 7B, comparator 73 for the present field therefore outputs "L" for an image signal corresponding to a pixel of the region (light emission region) shown by the white round, and outputs "H" for an image signal corresponding to a pixel of the region (no light emission region) outside the round.

Fig. 7D is a diagram for schematically showing one example of a region where AND gate 74 of afterglow suppressing circuit 48 outputs "H".

AND gate 74 outputs "H" when both of the output of comparator 72 for the preceding field and the output of comparator 73 for the present field are "H". When the right-eye image signal of Fig. 7A is input into comparator 72 for the preceding field and the left-eye image signal of Fig. 7B is input into comparator 73 for the present field, AND gate 74 outputs "H" for the following image signal. The image signal corresponds to a pixel that exists in the light emission region of the right-eye image of Fig. 7A and exists in the no light emission region of the left-eye image of Fig. 7B, as shown by one example of Fig. 7D. In other words, the image signal corresponds to the inside of the crescent-shaped region of Fig. 7D.

AND gate 74 outputs "H" for the image signal corresponding to a pixel displaying a gradation equal to or higher than high-gradation threshold value C1 in the preceding field, and displaying a gradation equal to or lower than low-gradation threshold value C2 (in the present embodiment, black) in the present field. In other words, the image signal for which AND gate 74 outputs "H" corresponds to a pixel in the region where an afterimage is expected to occur in the present field. Therefore, the crescent-shaped region of Fig. 7D indicates a region where an afterimage is expected to occur in the present field.

Counter 75 calculates the number of pixels where an afterimage is expected to occur in the present field by counting the number of pixels where the output of AND gate 74 is "H". Therefore, in panel 10, the area of the region where an afterimage is expected to occur in the present field is large when the calculation value is large, and the area of the region where an afterimage is expected to occur is small when the calculation value is small.

Number-of-afterimage-pixels comparator 76 outputs "H" when the calculation value of counter 75 is equal to or larger than number-of-pixels threshold Na. In other words, number-of-afterimage-pixels comparator 76 outputs "H" when the area of the region where an afterimage is expected to occur becomes a value that is not smaller than the area corresponding to number-of-pixels threshold Na.

One-V latch 77 latches the final output in one field of number-of-afterimage-pixels comparator 76 using the vertical synchronizing signal, so that the output thereof is held for the next one field period.

One-V delay 68 delays the image signal of the present field by one-vertical synchronizing period in order to align the phases of the output of one-V latch 77 and the image signal.

In the field where the output of one-V delay 68 is "H", adder 69 adds predetermined gradation value K to the image signal (luminance signal) of the present field that is delayed by one-vertical synchronizing period by one-V delay 68 and has a phase matched with that of the output of one-V latch 77. Therefore, adder 69 adds predetermined gradation value K to the image signal (luminance signal) in a field in which the number of pixels where an afterimage is expected to occur is equal to or larger than number-of-pixels threshold Na, namely in a field in which the region where an afterimage is expected to occur has an area that is not smaller than that defined by number-of-pixels threshold Na.

Thus, in the present exemplary embodiment, predetermined gradation value K is added to the image signal (luminance signal) displayed in a certain field (present field) when the number of pixels satisfying the following conditions is equal to or larger than number-of-pixels threshold Na:

the gradation of luminance equal to or higher than high-gradation threshold value C1 is displayed in the field (preceding field) immediately before the certain field; and
the gradation of luminance equal to or lower than low-gradation threshold value C2 is displayed in the certain field (present field).

Thus, in the field having large area of the region where an afterimage is expected to occur, the luminance increases by the value corresponding to predetermined gradation value K in the whole screen. Therefore, the luminance (luminance of black level) in the darkest region of the image signal of the display image also increases.

Fig. 7E is a diagram for schematically showing one example of the appearance of a display image on panel 10 when predetermined gradation value K is added to the left-eye image (luminance signal) of the present field.

As shown in Fig. 7E, by adding predetermined gradation value K to the image signal (luminance signal), the luminance of the image displayed on panel 10 increases by the value corresponding to predetermined gradation value K in the whole screen, and the luminance (luminance of black level) in the darkest region of the image signal also increases by the value corresponding to predetermined gradation value K. Thus, the contrast of the display image reduces but the luminance of the whole display image increases, so that the user hardly visually recognizes the afterimage.

In the present exemplary embodiment, the crosstalk when a 3D image is displayed can be suppressed. For example, in Fig. 7, the crosstalk where the afterimage of the right-eye image in the preceding field mixes with the left-eye image in the present field can be suppressed. A high-quality 3D image can be displayed on panel 10.

In the above description, the preceding field is a right-eye image and the present field is a left-eye image. However, also when the image signal in the present field is a right-eye image signal and the image signal in the preceding field is a left-eye image signal, afterglow suppressing circuit 48 performs the operation where the right and left of the above description are switched, and can suppress the crosstalk where the afterimage of the left-eye image in the preceding field mixes with the right-eye image in the present field.

In the present exemplary embodiment, as shown in Fig. 4, the forced initializing operation is performed in the initializing period of subfield SF5, and the selective initializing operation is performed in the initializing period of the other subfields. The reason is described below.

In a discharge cell for displaying bright gradation, sustain discharge occurs in a plurality of subfields of one field. Therefore, in the discharge cell, a sufficient number of priming particles occur in response to the sustain discharge, and the stable address discharge can be caused. However, in a discharge cell for displaying dark gradation, especially in a discharge cell for emitting light only in subfield SF5 of the smallest luminance weight, the number of the priming particles becomes insufficient and the address discharge is apt to become unstable.

The wall charge and priming particles that occur in the initializing discharge or sustain discharge gradually disappear with the passage of time.

The wall charge and priming particles in the final subfield (for example, subfield SF5) of one field in the discharge cell undergoing an address operation in a midway subfield are compared with those in the discharge cell undergoing no address operation in the midway subfield. Here, the midway subfield is one or more of subfield SF1 through subfield SF4, for example. In this case, the amount of the wall charge and priming particles in the discharge cell undergoing no address operation in the midway subfield is smaller.

In the discharge cell undergoing the address operation in the midway subfield, sustain discharge occurs due to the address operation, and the wall charge and priming particles are generated. In the discharge cell undergoing no address operation in the midway subfield, sustain discharge does not occur in the period from subfield SF1 to the time immediately before the final subfield. Therefore, there is no opportunity to generate wall charge and priming particles, and hence the amount of the wall charge and priming particles in the discharge cell is smaller. Therefore, the address operation in the final subfield can become unstable.

In the subfield of the largest luminance weight, sustain discharge occurs in a discharge cell for displaying bright gradation, but sustain discharge does not occur in a discharge cell for displaying dark gradation. For example, when an image with a dark pattern is displayed on panel 10, no sustain discharge can occur in the subfield of the largest luminance weight at all. The following phenomenon is experimentally confirmed: regarding a generally viewed moving image, the number of discharge cells for emitting light is large in a subfield of small luminance weight. Therefore, when a general moving image is displayed on panel 10, the occurrence probability of sustain discharge in the subfield of the smallest luminance weight is higher than that in the subfield of the largest luminance weight. This phenomenon depends on the pattern of the image. In other words, the occurrence probability of sustain discharge in the subfield of the largest luminance weight is lower than that in the subfield of the smallest luminance weight.

Therefore, in the structure where the luminance weight of subfield SF1 is set to be the largest and the luminance weight is sequentially decreased to the final subfield, the occurrence probability of sustain discharge in subfield SF1 is low and hence a discharge cell where the address operation in the final subfield is unstable can occur.

When a forced initializing operation is performed in the initializing period of subfield SF5, the address operation can be performed to cause address discharge in subfield SF5 before the priming particles generated by the forced initializing operation disappear. Therefore, stable address discharge can be caused even in a discharge cell for emitting light only in subfield SF5 of the smallest luminance weight.

By performing not forced initializing operation but selective initializing operation in the initializing period in subfields other than subfield SF5, light emission caused by initializing discharge is suppressed, the luminance of black level is reduced, and the contrast of the display image can be improved.

In the present exemplary embodiment, the subfield occurring at the end of each field is set to have a structure where the luminance weight is the smallest and the forced initializing operation is performed. Thanks to such structure, by adding predetermined gradation value K to the image signal (luminance signal) for displaying black, address discharge and sustain discharge can be caused in the subfield occurring at the end of the field.

The address operation in subfield SF5 is performed after the forced initializing operation, so that the address discharge by the address operation can be caused stably. Further, the address operation can be stably performed in the next field due to the priming particles generated by sustain discharge by the sustain operation after the address discharge.

The present invention is not limited to the above-mentioned subfield structure. The present exemplary embodiment can be applied to the other subfield structure. For example, the subfield may be generated where the forced initializing operation is performed firstly in each field. The luminance weight may be set for each subfield so that the subfield of the smallest luminance weight is generated firstly in the field, then the subfield of the largest luminance weight is generated, and then the luminance weights of the subsequent subfields decrease sequentially.

## SECOND EXEMPLARY EMBODIMENT

In the first exemplary embodiment, crosstalk is suppressed by adding predetermined gradation value K to an image signal (luminance signal) corresponding to one field period in the field in which the number of pixels where an afterimage is expected to occur is equal to or larger than number-of-pixels threshold Na. In the present invention, the method of suppressing crosstalk is not limited to this method.

For example, an image display region of panel 10 is divided into a plurality of display blocks, and the number of pixels where an afterimage is expected to occur is counted in each display block. In a display block having a large counting result, the crosstalk can be suppressed by adding predetermined gradation value K to the image signal (luminance signal) and increasing the luminance in the field. In the second exemplary embodiment, one example of such structure is described.

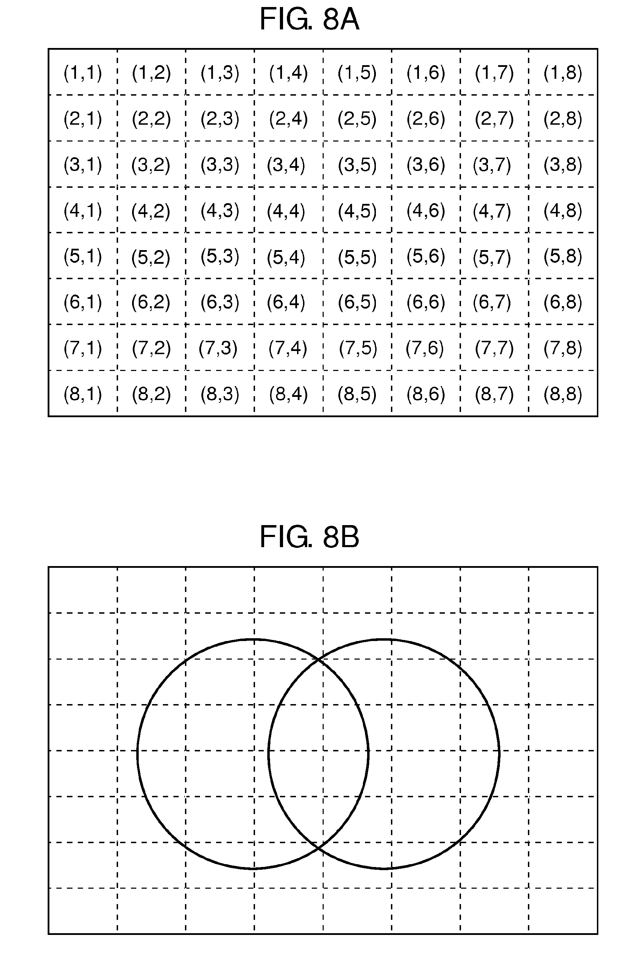

Fig. 8A and Fig. 8B are diagrams for schematically showing an example where panel 10 is divided into a plurality of display blocks in accordance with the second exemplary embodiment of the present invention. In Fig. 8A and Fig. 8B, the image display region of panel 10 is divided into eight in the row direction and divided into eight in the column direction, namely 64 (8x8) display blocks are disposed in the image display region of panel 10. As shown in Fig. 8A, each display block has an address represented by (row number, column number) in the second exemplary embodiment.

The broken lines for dividing panel 10 in Fig. 8A and Fig. 8B and the address in each display block in Fig. 8A are used for making the following description easy-to-understand. The broken lines and addresses are not actually displayed on panel 10.

In the second exemplary embodiment, the image display region of panel 10 is divided into a plurality of display blocks as shown in Fig. 8A and Fig. 8B.

The number of pixels satisfying the following conditions is counted in each display block, and is compared with number-of-pixels threshold Nb:

the gradation of the luminance equal to or higher than high-gradation threshold value C1 is displayed in the field (preceding field) immediately before a certain field; and

the gradation of the luminance equal to or lower than low-gradation threshold value C2 is displayed in the certain field (present field).

In a display block where the number of pixels is equal to or larger than number-of-pixels threshold Nb, first gradation value K1 is added to the image signal (luminance signal) to be displayed in the certain field (present field). In a display block where first gradation value K1 is not added in the certain field (present field) and that is adjacent to the display block where first gradation value K1 is added in the certain field (present field), second gradation value K2 lower than first gradation value K1 is added to the image signal (luminance signal) displayed in the certain field (present field).

Hereinafter, the example is described where a right-eye image signal for displaying a right-eye image of Fig. 7A is input into an afterglow suppressing circuit in the preceding field, and a left-eye image signal for displaying a left-eye image of Fig. 7B is input into the afterglow suppressing circuit in the present field.

When the right-eye image signal of Fig. 7A is input into the afterglow suppressing circuit in the preceding field as shown in Fig. 8A and Fig. 8B, no light is emitted in the preceding field in the display blocks having the following addresses: (1,1) through (8,1), (1,2) through (8,2), (1,3) through (8,3), (1,8) through (8,8), (1,4) through (1,7), (8,4) through (8,7), (2,4), (2,7), (7,4), and (7,7). In other words, in these display blocks, there is no pixel that emits light at a luminance equal to or higher than high-gradation threshold value C1 in the preceding field. Therefore, afterglow does not occur in these display blocks.

In the display blocks having addresses (3,4), (4,4), (5,4), and (6,4), a pixel that has emitted light in the preceding field emits light also in the present field. In other words, in these display blocks, a pixel that has emitted light at a luminance equal to or higher than high-gradation threshold value C1 in the preceding field emits light at a luminance higher than low-gradation threshold value C2 in the present field. Therefore, even when afterglow occurs in the preceding field, the afterglow is not recognized as an afterimage by a user.

However, the pixel included in each of display blocks having addresses (3,6), (4,6), (5,6) and (6,6) emits light in the preceding field and does not emit light in the present field. In display blocks having addresses (2,5), (2,6), (3,5), (3,7), (4,5), (4,7), (5,5), (5,7), (6,5), (6,7), (7,5), (7,6), there are pixels that emit light in the preceding field and do not emit light in the present field. In other words, in these display blocks, there are some pixels that emits light at a luminance equal to or higher than high-gradation threshold value C1 in the preceding field and emits light at a luminance equal to or lower than low-gradation threshold value C2 in the present field. Therefore, when afterglow occurs in these pixels, the afterimage by the afterglow can be recognized by a user.

In the second exemplary embodiment, in a display block where an afterimage can be recognized by a user, first gradation value K1 is added to the image signal (luminance signal) of the present field similarly to the first embodiment. In other words, in this display block, the number of pixels that emit light at a luminance equal to or higher than high-gradation threshold value C1 in the preceding field and emit light at a luminance equal to or lower than low-gradation threshold value C2 in the present field is equal to or larger than number-of-pixels threshold Nb.

In the second exemplary embodiment, in a display block in which no afterimage can be recognized by a user and that is adjacent to the display block where first gradation value K1 is added to the image signal (luminance signal), second gradation value K2 is added to the image signal (luminance signal) in the present field. In a display block that is adjacent to the display block where first gradation value K1 is added to the image signal (luminance signal) and in which almost all of the pixels emit light at a luminance higher than low-gradation threshold value C2, second gradation value K2 is not added to the image signal (luminance signal) of the present field. For example, in this display block, 90% or more of the pixels emit light at a luminance higher than low-gradation threshold value C2.

In the example of Fig. 8A and Fig. 8B, display blocks where first gradation value K1 is added to the image signal (luminance signal) have the following addresses: (3,6), (4,6), (5,6), (6,6), (2,5), (2,6), (3,5), (3,7), (4,5), (4,7), (5,5), (5,7), (6,5), (6,7), (7,5), and (7,6).

Display blocks where second gradation value K2 is added have the following addresses: (2,4), (1,5), (1,6), (2,7), (3,8), (4,8), (5,8), (6,8), (7,7), (8,6), (8,5), and (7,4)

In the display blocks having addresses (3,4), (4,4), (5,4), and (6,4), almost all of the pixels emit light in the present field and hence second gradation value K2 is not added to the image signal (luminance signal) of the present field.

Thus, in the second exemplary embodiment, the number of pixels satisfying the following conditions is counted in each display block:

the gradation of the luminance equal to or higher than high-gradation threshold value C1 is displayed in the field (preceding field) immediately before a certain field; and
the gradation of the luminance equal to or lower than low-gradation threshold value C2 is displayed in the certain field (present field).

Then, the number of pixels is compared with number-of-pixels threshold Nb. In a display block where the number of pixels is equal to or larger than number-of-pixels threshold Nb, first gradation value K1 is added to the image signal (luminance signal) displayed in the certain field (present field). In a display block in which first gradation value K1 is not added in the certain field (present field) and that is adjacent to the display block where first gradation value K1 is added in the certain field (present field), second gradation value K2 lower than first gradation value K1 is added to the image signal (luminance signal) displayed in the certain field (present field).

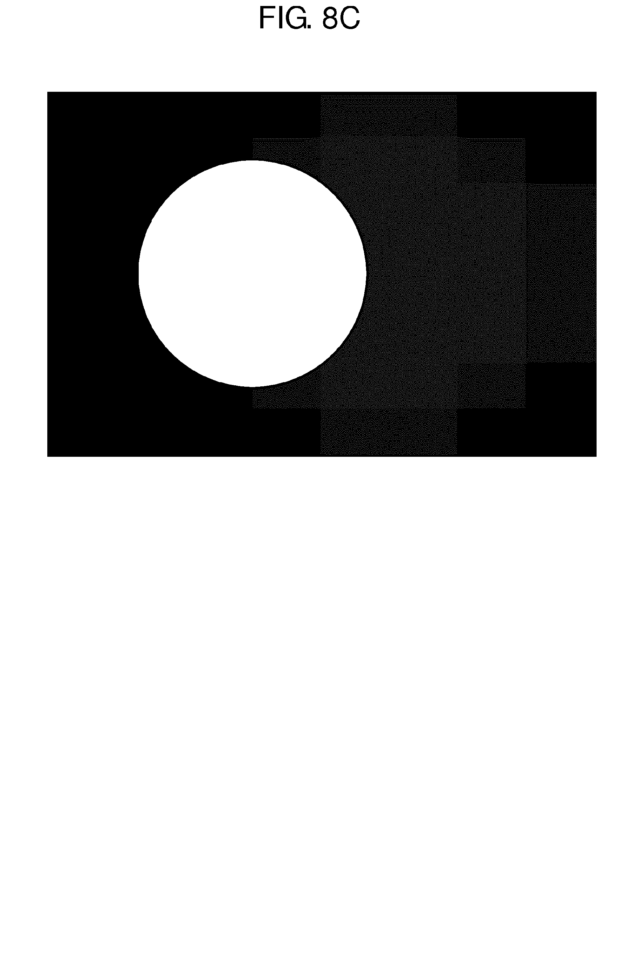

Fig. 8C is a diagram for schematically showing the appearance of a display image when first gradation value K1 or second gradation value K2 is added to each display block of panel 10 in response to an image signal in accordance with the second exemplary embodiment of the present invention.

Fig. 8C shows one example of the appearance of the display image when first gradation value K1 or second gradation value K2 is added to the image signal (luminance signal) of the present field for displaying a left-eye image in each display block of panel 10, in response to the result shown in Fig. 8B.

In the present exemplary embodiment, second gradation value K2 is set to be lower than first gradation value K1. At this case, as shown in the example of Fig. 8C, a display block where second gradation value K2 lower than first gradation value K1 is added is sandwiched between the display block where first gradation value K1 is added to the image signal (luminance signal) and the display block where first gradation value K1 is not added. Therefore, the variation in luminance is smoothed, and the boundary between the display block where first gradation value K1 is added and the display block where first gradation value K1 is not added can be made inconspicuous.

Next, the configuration of the afterglow suppressing circuit of the present exemplary embodiment is described.

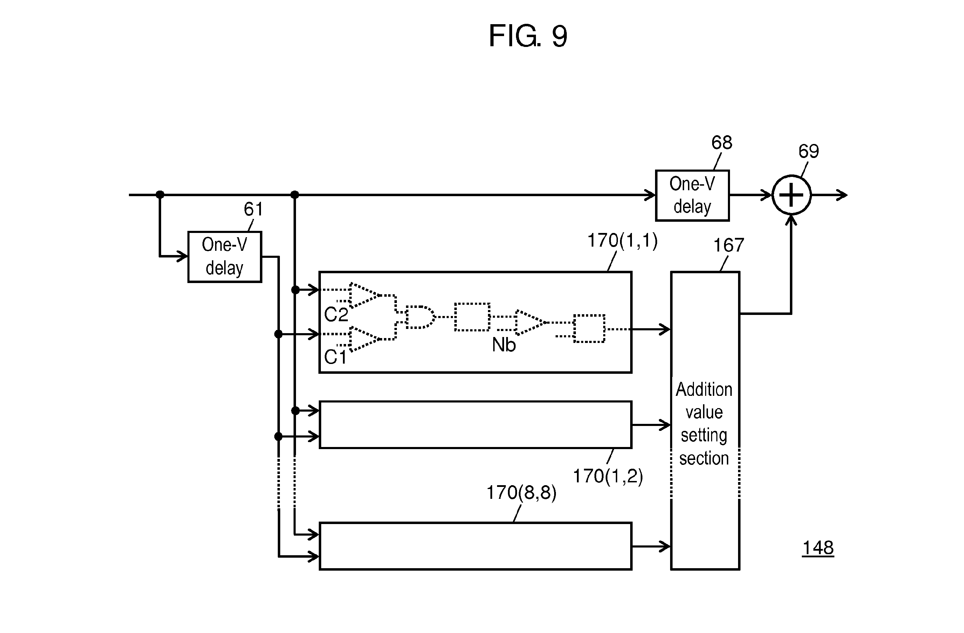

Fig. 9 is a circuit block diagram of one configuration example of afterglow suppressing circuit 148 of the plasma display apparatus in accordance with the second exemplary embodiment of the present invention.

Afterglow suppressing circuit 148 includes one-V delay 61, addition value setting section 167, one-V delay 68, adder 69, and a plurality of afterglow detecting circuits 170. As many afterglow detecting circuits 170 as display blocks are disposed in afterglow suppressing circuit 148. Therefore, in the structure where the image display region of panel 10 is divided into eight in the row direction and divided into eight in the column direction, namely 64 (8x8) display blocks are disposed in the image display region of panel 10, afterglow suppressing circuit 148 includes 64 afterglow detecting circuits 170, namely afterglow detecting circuits 170 (1,1) through afterglow detecting circuits 170 (8 8).

One-V delay 61, one-V delay 68, and adder 69 in afterglow suppressing circuit 148 operate similarly to one-V delay 61, one-V delay 68, and adder 69 in afterglow suppressing circuit 48 of the first exemplary embodiment.

Each of the plurality of afterglow detecting circuits 170 (each of afterglow detecting circuits 170 (1,1) through afterglow detecting circuits 170 (8,8) in the example of Fig. 9) has the same circuit configuration as that of afterglow detecting circuit 70 of the first embodiment, and operates similarly to it. However, number-of-afterimage-pixels comparator 76 compares the output of counter 75 with number-of-pixels threshold Nb (the numerical value of number-of-pixels threshold Nb is smaller than that of number-of-pixels threshold Na).

Each afterglow detecting circuit 170 counts the number of pixels satisfying the following conditions in each display block:

light is emitted at a luminance equal to or higher than high-gradation threshold value C1 in the field (preceding field) immediately before a certain field; and light is emitted at a luminance equal to or lower than low-gradation threshold value C2 is displayed in the certain field (present field).

Then, each afterglow detecting circuit 170 compares the number of pixels with number-of-pixels threshold Nb, and outputs "H" in a field where the number of pixels is equal to or larger than number-of-pixels threshold Nb or outputs "L" in a field where the number of pixels is smaller than number-of-pixels threshold Nb.

In the present embodiment, number-of-pixels threshold Nb is a numerical value smaller than number-of-pixels threshold Na. For example, (number-of-pixels threshold Nb) = (number-of-pixels threshold Na)/64.

Thus, each afterglow detecting circuit 170 outputs "H" in a field where the number of pixels expected to generate afterglow is large (equal to or larger than number-of-pixels threshold Nb), or outputs "L" in a field where the number of pixels expected to generate afterglow is small (smaller than number-of-pixels threshold Nb).

Addition value setting section 167 adds first gradation value K1 to the image signal (luminance signal), of image signals output by one-V delay 68, with a timing corresponding to the display block where afterglow detecting circuit 170 has output "H". When afterglow detecting circuit 170 outputs "L" in the display block adjacent to the display block where afterglow detecting circuit 170 has output "H", addition value setting section 167 adds second gradation value K2 to the image signal (luminance signal) with a timing corresponding to the latter display block. Therefore, as shown in the example of Fig. 8C, the boundary between the display block where first gradation value K1 is added to the image signal (luminance signal) and the display block where first gradation value K1 is not added can be made inconspicuous.

In the present exemplary embodiment, the image display region of panel 10 is divided into eight in the row direction and divided into eight in the column direction, namely is divided into 64 display blocks in total. However, the dividing method into display blocks of the present invention is not limited to this. For example, the image display region may be divided into 16 in the row direction and divided into 16 in the column direction, namely is divided into 128 (16x16) display blocks in total. Alternatively, the image display region of panel 10 may be divided in another method.

In the first exemplary embodiment and second exemplary embodiment, one field is constituted by five subfields. In the present invention, however, the number of subfields constituting one field is not limited to the above-mentioned one. For example, when the number of subfields is increased beyond five, the number of gradations capable of being displayed on panel 10 can be further increased.

In the first exemplary embodiment and second exemplary embodiment, the luminance weights of the subfields are set at powers of "2", namely the luminance weights of subfield SF1 through subfield SF5 are set at (16, 8, 4, 2, 1). However, the luminance weights of the subfields are not limited to these numerical numbers. When the combination of the subfields for determining the gradation is made flexible (for example, (12, 7, 3, 2, 1)), the coding for suppressing occurrence of the moving image false contour is allowed. The number of subfields constituting one field and the luminance weights of the subfields are set appropriately in response to the characteristics of panel 10 and the specification of plasma display apparatus 40.

In the present exemplary embodiments, afterglow suppressing circuit 48 performs each calculation using the gradation value of luminance. However, the present invention is not limited to this configuration. For example, the following configuration may be employed: instead of the gradation value of luminance, the addition value or an average value of gradation value (R) of a red image signal, gradation value (G) of a green image signal, and gradation value (B) of a blue image signal is determined for each pixel, and is used for each calculation in afterglow suppressing circuit 48. Alternatively, the following configuration may be employed: three afterglow suppressing circuits 48 (afterglow suppressing circuit 48R for a red image signal, afterglow suppressing circuit 48G for a green image signal, and afterglow suppressing circuit 48B for a blue image signal) are disposed, and the calculation similar to the above calculation is performed for the red image signal, green image signal, and blue image signal.

Each circuit block shown in the exemplary embodiments of the present invention may be configured as an electric circuit for performing each operation shown in the exemplary embodiments, or may be configured using a microcomputer or the like programmed so as to perform a similar operation.

In the present embodiments, an example where one pixel is formed of discharge cells of three colors R, G, and B has been described. However, also in a panel where one pixel is formed of discharge cells of four or more colors, the configuration shown in the present embodiment can be applied and a similar effect can be produced.

The above-mentioned driver circuit is simply one example, its configuration is not limited to the above-mentioned one.

Each specific numerical value shown in the exemplary embodiments of the present invention is set based on the characteristics of panel 10 having a screen size of 50 inches and having 1024 display electrode pairs 24, and is simply one example in the embodiment. The present invention is not limited to these numerical values. Numerical values are preferably set optimally in response to the characteristics of the panel or the specification of the plasma display apparatus. These numerical values can vary in a range allowing the above-mentioned effect. The number of subfields constituting one field and the luminance weight of each subfield are not limited to the values shown in the exemplary embodiments of the present invention, but the subfield structure may be changed based on an image signal or the like.

INDUSTRIAL APPLICABILITY

In a plasma display apparatus usable as a 3D image display apparatus of the present invention, the crosstalk can be reduced and the image display quality can be improved for a user who views a 3D image displayed on the panel through shutter glasses. Therefore, the present invention is useful as a driving method of a plasma display apparatus, a plasma display apparatus, and a plasma display system.

REFERENCE MARKS IN THE DRAWINGS

    10 panel
    21 front substrate
    22 scan electrode
    23 sustain electrode
    24 display electrode pair
    25, 33 dielectric layer
    26 protective layer
    31 rear substrate
    32 data electrode
    34 barrier rib
    35 phosphor layer
    40 plasma display apparatus
    41 image signal processing circuit
    42 data electrode driver circuit
    43 scan electrode driver circuit
    44 sustain electrode driver circuit
    45 timing generation circuit
    46 control signal output section
    48, 148 afterglow suppressing circuit
    49 image data converting circuit
    50 shutter glasses
    52R right-eye shutter
    52L left-eye shutter
    61, 68 one-V delay
    67, 167 addition value setting section
    69 adder
    70, 170 afterglow detecting circuit
    72 comparator for preceding field
    73 comparator for present field

76 number-of-afterimage-pixels comparator
74 AND gate
75 counter
77 one-V latch

**Claims**

1. A driving method of a plasma display apparatus comprising:

   displaying an image on a plasma display panel having a plurality of pixels each of which is formed of a plurality of discharge cells by alternately repeating a right-eye field for displaying a right-eye image signal and a left-eye field for displaying a left-eye image signal, wherein a predetermined gradation value is added to an image signal to be displayed in a certain field when the number of pixels where a gradation equal to or higher than a high gradation threshold is displayed in a field immediately before the certain field and a gradation equal to or lower than a low gradation threshold is displayed in the certain field is equal to or larger than a number-of-pixels threshold.

2. A driving method of a plasma display apparatus comprising:

   displaying an image on a plasma display panel having a plurality of pixels each of which is formed of a plurality of discharge cells by alternately repeating a right-eye field for displaying a right-eye image signal and a left-eye field for displaying a left-eye image signal, wherein an image display region of the plasma display panel is divided into a plurality of display blocks, wherein a first gradation value is added to an image signal to be displayed in a certain field in a display block in which the number of pixels where a gradation equal to or higher than a high gradation threshold is displayed in a field immediately before the certain field and a gradation equal to or lower than a low gradation threshold is displayed in the certain field is equal to or larger than a number-of-pixels threshold, and wherein a second gradation value lower than the first gradation value is added to an image signal to be displayed in the certain field in a display block in which the first gradation value is not added in the certain field and that is adjacent to the display block where the first gradation value is added in the certain field.

3. The driving method of the plasma display apparatus of claim 1 or claim 2, wherein

luminance weight is set for each subfield of each of the right-eye field and the left-eye field so that the luminance weight of a first subfield of one field is set at a largest, the luminance weights of the subsequent subfields decrease sequentially, and the luminance weight of a final subfield of the one field is set at a smallest, and

in the initializing period of the final subfield of the one field, a forced initializing operation of causing initializing discharge in the discharge cells is performed regardless of an operation of the immediately preceding subfield, and, in the initializing period of the other subfields, a selective initializing operation of causing initializing discharge is performed only in a discharge cell having undergone address discharge in the immediately preceding subfield.

4. A plasma display apparatus comprising:

   a plasma display panel having a plurality of pixels each of which is formed of a plurality of discharge cells; and
   a driver circuit for driving the plasma display panel,
   wherein the plasma display apparatus displays an image on the plasma display panel by alternately repeating a right-eye field for displaying a right-eye image signal and a left-eye field for displaying a left-eye image signal, and
   wherein, when the number of pixels where a gradation equal to or higher than a high gradation threshold is displayed in a field immediately before a certain field and a gradation equal to or lower than a low gradation threshold is displayed in the certain field is equal to or larger than a number-of-pixels threshold, the driver circuit adds a predetermined gradation value to an image signal to be displayed in the certain field.

5. A plasma display apparatus comprising:

   a plasma display panel having a plurality of pixels each of which is formed of a plurality of discharge cells; and
   a driver circuit for driving the plasma display panel,
   wherein the plasma display apparatus displays an image on the plasma display panel by alternately repeating a right-eye field for displaying a right-eye image signal and a left-eye field for displaying a left-eye image signal,
   wherein the driver circuit divides an image display region of the plasma display panel into a plurality of display blocks,
   wherein the driver circuit adds a first gradation value to an image signal to be displayed in a certain field in a display block in which the number of pixels where a gradation equal to or higher than a high gradation threshold is displayed in a field immediately before the certain field and a gradation equal to or lower than a low gradation threshold is displayed in the certain field is equal to or larger than a number-of-pixels threshold, and

wherein the driver circuit adds a second gradation value lower than the first gradation value to an image signal to be displayed in the certain field in a display block in which the first gradation value is not added in the certain field and that is adjacent to the display block where the first gradation value is added in the certain field.

6. The plasma display apparatus of claim 4 or claim 5, wherein
the driver circuit has a control signal output section for outputting a shutter control signal synchronous with the right-eye field and the left-eye field.

7. A plasma display system comprising:

a plasma display apparatus including:

a plasma display panel having a plurality of pixels each of which is formed of a plurality of discharge cells; and
a driver circuit that drives the plasma display panel and has a control signal output section for outputting a shutter control signal synchronous with a right-eye field for displaying a right-eye image signal and a left-eye field for displaying a left-eye image signal,
wherein the plasma display apparatus displays an image on the plasma display panel by alternately repeating the right-eye field and the left-eye field; and

shutter glasses that include a control signal receiving section for receiving the shutter control signal, a right-eye shutter, and a left-eye shutter, and open or close the right-eye shutter and the left-eye shutter based on the shutter control signal,
wherein, when the number of pixels where a gradation equal to or higher than a high gradation threshold is displayed in a field immediately before a certain field and a gradation equal to or lower than a low gradation threshold is displayed in the certain field is equal to or larger than a number-of-pixels threshold, the driver circuit adds a predetermined gradation value to an image signal to be displayed in the certain field.

8. A plasma display system comprising:

a plasma display apparatus including:

a plasma display panel having a plurality of pixels each of which is formed of a plurality of discharge cells; and
a driver circuit that drives the plasma display panel and has a control signal output section for outputting a shutter control signal synchronous with a right-eye field for displaying a right-eye image signal and a left-eye field for displaying a left-eye image signal,
wherein the plasma display apparatus displays an image on the plasma display panel by alternately repeating the right-eye field and the left-eye field; and

shutter glasses that include a control signal receiving section for receiving the shutter control signal, a right-eye shutter, and a left-eye shutter, and open or close the right-eye shutter and the left-eye shutter based on the shutter control signal,
wherein the driver circuit divides an image display region of the plasma display panel into a plurality of display blocks,
wherein the driver circuit adds a first gradation value to an image signal to be displayed in a certain field in a display block in which the number of pixels where a gradation equal to or higher than a high gradation threshold is displayed in a field immediately before the certain field and a gradation equal to or lower than a low gradation threshold is displayed in the certain field is equal to or larger than a number-of-pixels threshold, and
wherein the driver circuit adds a second gradation value lower than the first gradation value to an image signal to be displayed in the certain field in a display block in which the first gradation value is not added in the certain field and that is adjacent to the display block where the first gradation value is added in the certain field.

# FIG. 1

# FIG. 2

D1  D2 ------------------------------- Dm

SU1 —                                    — SC1
SU2 —                                    — SC2

Discharge cell

SUn —                                    — SCn

10

# FIG. 3

Image signal → | Afterglow suppressing circuit 48 | → | Image data converting circuit 49 |

Image signal processing circuit 41

Data electrode driver circuit 42

Horizontal synchronizing signal →
Vertical synchronizing signal →

Timing generation circuit 45

Scan electrode driver circuit 43

Panel 10

Sustain electrode driver circuit 44

46

52L 52R

50

40

# FIG. 4

EP 2 544 170 A1

# FIG. 5

EP 2 544 170 A1

# FIG. 6

EP 2 544 170 A1

FIG. 7A

FIG. 7B

FIG. 7C

FIG. 7D

FIG. 7E

## FIG. 8A

| (1,1) | (1,2) | (1,3) | (1,4) | (1,5) | (1,6) | (1,7) | (1,8) |
|-------|-------|-------|-------|-------|-------|-------|-------|
| (2,1) | (2,2) | (2,3) | (2,4) | (2,5) | (2,6) | (2,7) | (2,8) |
| (3,1) | (3,2) | (3,3) | (3,4) | (3,5) | (3,6) | (3,7) | (3,8) |
| (4,1) | (4,2) | (4,3) | (4,4) | (4,5) | (4,6) | (4,7) | (4,8) |
| (5,1) | (5,2) | (5,3) | (5,4) | (5,5) | (5,6) | (5,7) | (5,8) |
| (6,1) | (6,2) | (6,3) | (6,4) | (6,5) | (6,6) | (6,7) | (6,8) |
| (7,1) | (7,2) | (7,3) | (7,4) | (7,5) | (7,6) | (7,7) | (7,8) |
| (8,1) | (8,2) | (8,3) | (8,4) | (8,5) | (8,6) | (8,7) | (8,8) |

## FIG. 8B

# FIG. 8C

EP 2 544 170 A1

# FIG. 9

## INTERNATIONAL SEARCH REPORT

| International application No. |
| --- |
| PCT/JP2011/001203 |

A.  CLASSIFICATION OF SUBJECT MATTER
*G09G3/20*(2006.01)i, *G09G3/288*(2006.01)i, *H04N5/66*(2006.01)i, *H04N13/04*
(2006.01)i

According to International Patent Classification (IPC) or to both national classification and IPC

B.  FIELDS SEARCHED

Minimum documentation searched (classification system followed by classification symbols)
G09G3/20, G09G3/288, H04N5/66, H04N13/04

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | JP 10-322726 A  (Sanyo Electric Co., Ltd.), 04 December 1998 (04.12.1998), paragraphs [0004] to [0007]; fig. 3 (Family: none) | 1-8 |
| A | JP 2002-199416 A  (Nippon Hoso Kyokai), 12 July 2002 (12.07.2002), paragraphs [0018] to [0022]; fig. 2 (Family: none) | 1-8 |
| A | JP 2007-193338 A  (LG Electronics Inc.), 02 August 2007 (02.08.2007), paragraphs [0079] to [0082]; fig. 8 & US 2007/0164932 A1    & EP 1808843 A1 & KR 10-2007-0075943 A   & CN 101017630 A | 1-8 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 May, 2011 (25.05.11) | 07 June, 2011 (07.06.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/001203 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2008-152061 A  (Matsushita Electric Industrial Co., Ltd.), 03 July 2008 (03.07.2008), paragraphs [0075] to [0120]; fig. 3 to 6 (Family: none) | 1-8 |
| A | JP 2001-255863 A  (Nippon Hoso Kyokai), 21 September 2001 (21.09.2001), paragraphs [0009] to [0013]; fig. 1 (Family: none) | 1-8 |
| A | JP 2005-351949 A  (Mitsubishi Electric Corp.), 22 December 2005 (22.12.2005), paragraphs [0043] to [0049]; fig. 1 (Family: none) | 1-8 |
| A | JP 2006-284886 A  (Pioneer Corp.), 19 October 2006 (19.10.2006), paragraphs [0022] to [0043]; fig. 3 to 4 & US 2006/0232613 A1    & EP 1708157 A2 & CN 1841465 A | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000112428 A